# EUROPEAN PATENT SPECIFICATION

(11) **EP 3 023 367 B1**
(45) Date of publication and mention of the grant of the patent: **31.01.2018**
(21) Application number: 15195938.4
(22) Date of filing: 18.08.2014
(51) Int. Cl.: B65G 47/14, G07D 1/00, G07D 9/00, B65G 21/20

(54) **COIN CARRYING AND GUIDING DEVICE OF COIN PAYMENT APPARATUS**
MÜNZTRÄGER- UND -FÜHRUNGSVORRICHTUNG EINER MÜNZBEZAHLVORRICHTUNG
DISPOSITIF DE SUPPORT ET DE GUIDAGE D'APPAREIL DE PAIEMENT DE PIÈCES DE MONNAIE

(30) Priority: 31.08.2013 JP 2013180776
(43) Date of publication of application: 25.05.2016
(62) Divisional of application: 14181276.8
(73) Proprietor: Asahi Seiko Co. Ltd., Minato-ku, Tokyo 107-0062 (JP)
(72) Inventor: UMEDA, Masayoshi, Saitama-shi, Saitama (JP)
(74) Representative: Prüfer & Partner mbB Patentanwälte · Rechtsanwälte

(56) References cited:
- EP-A1- 1 679 667
- EP-A1- 1 734 485
- EP-A1- 1 804 219
- EP-A2- 1 526 483

## Description

### [Technical Field]

The present invention relates to a coin carrying and guiding device of a coin payment apparatus that delivers coins of a plurality of denominations individually from coin dispensers one by one, drops the coins onto a single carrying belt, and carries the coins to a coin receiving opening by a pair of guiding walls, which are vertically standing at a predetermined interval therebetween on the carrying belt.

Particularly, the present invention relates to the coin carrying and guiding device of the coin payment apparatus that can prevent the coins, which are juxtaposed between the pair of guiding walls, from being sandwiched therebetween and not being carried to the coin receiving opening and that brings the coins quickly into surface contact with the carrying belt. More particularly, the present invention relates to the coin carrying and guiding device of the coin payment apparatus that prevents the coins, which are juxtaposed between the pair of guiding walls, from being sandwiched therebetween and not being carried to the coin receiving opening and is formed at low cost.

The "coins" used in the present specification includes all the coins other than Japanese coins, US coins, and Euro coins.

### [Background Art]

As a first conventional technique, there is known a coin payment apparatus in which a first coin dispenser row and a second coin dispenser row, in which a plurality of coin dispensers having the same structure having an ejecting opening for ejecting stored coins one by one are juxtaposed along a straight line intersecting with the lines of the ejecting directions, are juxtaposed at a predetermined interval therebetween so that the lines of the ejecting directions of the first coin dispenser row and the second coin dispenser row are directed to the opposing coin dispenser rows, a carrying belt which is moved toward a coin receiving opening is disposed between the first coin dispenser row and the second coin dispenser row, and a pair of vertically standing guiding walls are disposed in both sides of the carrying belt; so that the coin ejected from the coin dispenser constituting the first coin dispenser row or the second coin dispenser row is dropped onto the carrying belt, and the coin is then carried toward the coin receiving opening by the carrying belt while the coin is guided by the pair of guiding walls (for example, Japanese Patent JP4665087B.

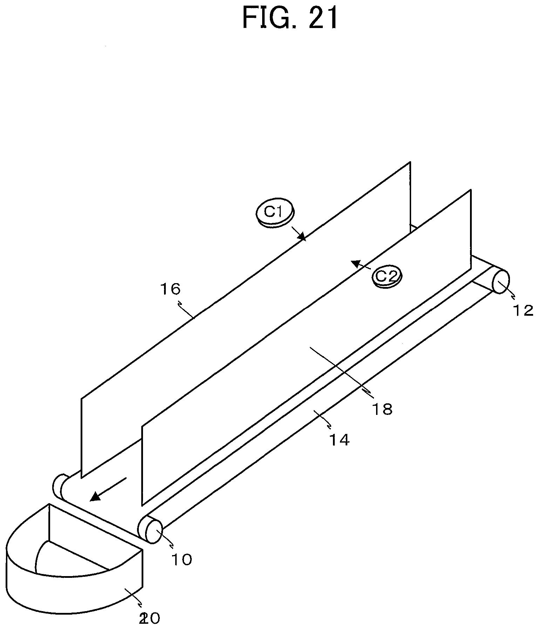

This will be explained with reference to FIG. 21 to FIG. 23. A carrying belt 14 is stretched between a pair of rollers 10 and 12, and a pair of a first guiding wall 16 and a second guiding wall 18, which are vertically standing with respect to the upper surface of the carrying belt 14, are disposed in parallel to each other at an interval wider than the maximum diameter of carried coins.

Therefore, coins C1 and C2 delivered from the upper side of the first guiding wall 16 or the second guiding wall 18 is dropped onto the carrying belt 14 and are carried toward a coin receiving opening 20 by arrow-direction movement of the carrying belt 14 while the coins are guided by the first guiding wall 16 and the second guiding wall 18.

As a second conventional technique, there is known a coin free-traveling preventing mechanism of a coin carrying path in which lower end parts of a first guiding wall and a second guiding wall, which are parallel to each other on a carrying belt with a predetermined interval therebetween and are disposed to be vertical to the surface of the carrying belt, are tilted so that the lower end parts get closer to the mutually opposed first-guiding-wall or second-guiding-wall side as they get closer to the surface of the carrying belt in order to carry coins quickly and reliably to one direction (Japanese Patent Application JPH1116025A).

As a third conventional technique, there is known a coin processing apparatus in which, when coins are to be placed on and carried by a flat belt, the coins are reliably dispensed in a dispensing direction since the belt is tilted so that the front side thereof is lowered in the direction of carrying the coins (Japanese Registered Utility Model JPH0659960U). Although it is not disclosed in the third conventional technique, it is a known technique for those skilled in the art that a pair of guiding walls, which are vertically standing with respect to the flat belt and disposed in parallel to each other with a predetermined interval therebetween, are disposed on the flat belt.

As a fourth conventional technique, there is known a coin processing apparatus which is configured to dispose a string member above a belt so as to topple rotating coins by the string member onto the belt in order to topple and reliably carry the coins rotating on the belt (Japanese Patent Application JPH09231442A).

As a fifth conventional technique, there is known a coin toppling mechanism of a coin processing apparatus in which a coin toppling member having a slope is disposed above a belt in order to topple and reliably carry coins rotating on the belt (Japanese Patent Application JP2011003047A).

### [Citation List]

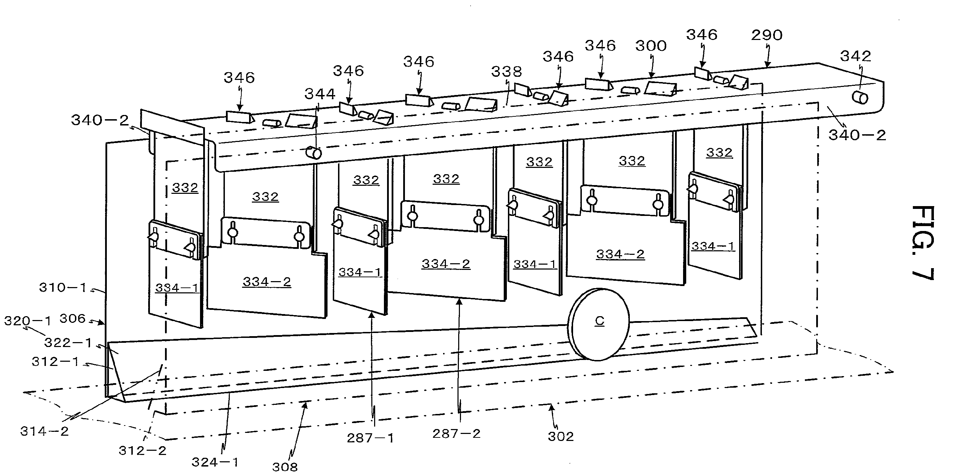

[Patent Literature 1] Japanese Patent Number JP4665087B (paragraph numbers 0149, 0186, FIG. 4, FIG. 7)
[Patent Literature 2] Japanese Patent JPH1116025A (paragraph numbers 0003, 0010, FIG. 1(b), FIG. 2 (b))
[Patent Literature 3] Japanese Utility Model JPH0659960U (paragraph numbers 0010 to 0013, FIG. 1)
[Patent Literature 4] Japanese Patent Application JPH09231442A (paragraph numbers 0010 to 0013, FIG. 1 to FIG. 3)
[Patent Literature 5] Japanese Patent Application JP2011003047A
   (paragraph numbers 0031 to 0033, FIG. 7)

### [Disclosure of the Invention]

### [Problems to be Solved by the Invention]

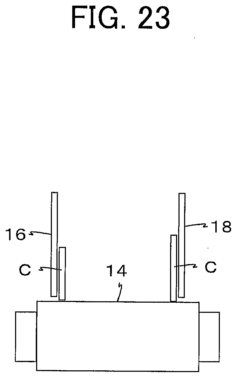

In the first conventional technique, the coins C1 and C2 (if there is large payment, more coins C) dropped onto the carrying belt 14 are brought into a standing state on the carrying belt 14 in a state that the coins C are leaning on the first guiding wall 16 or the second guiding wall 18 as shown in FIG. 23 because of the behavior that the coins are collided with the first guiding wall 16 or the second guiding wall 18 and rebounded in various directions and are jumped due to the back action of dropping onto the carrying belt 14, and the coins are rotated along with movement of the carrying belt 14. Therefore, a problem that the coins stay still at constant positions with respect to the carrying belt 14 and that the delivered coins are not dispensed to the coin receiving opening rarely occurs.

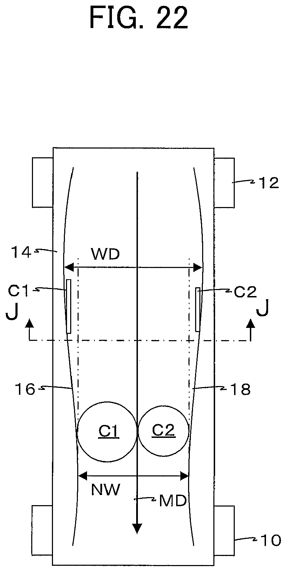

Although in a rare case, as shown in FIG. 22, depending on the combination of coins, in other words, the combination of coin diameters, there is a problem that the two coins C1 and C2 fit in the part between the first guiding wall 16 and the second guiding wall 18 in a juxtaposed state and cannot be dispensed to the coin receiving opening 20. This problem will be described in detail. The first guiding wall 16 and the second guiding wall 18 are disposed in parallel to each other in a macroscopic view; however, they are corrugated within an allowable range in a microscopic view. Therefore, regarding the intervals therebetween, a large interval part WD having a large interval in the direction orthogonal to a moving direction line MD of the carrying belt 14 and a small interval part NW having a small interval are present. Therefore, there is a problem of occurrence of a jamming phenomenon that, when the coins C1 and C2 are moved to the small diameter part NW in the downstream side after the two coins C1 and C2 are juxtaposed in the large interval part WD, the coins C1 and C2 are sandwiched and stopped like a wedge between the first guiding wall 16 and the second guiding wall 18, and the coins are not dispensed to the coin receiving opening 20 as a result. If at least one of the juxtaposed coins C has a jugged peripheral surface, this tendency is further increased. Similarly, in some cases, in a state in which one coin is in surface contact with the carrying belt 14 and another coin is standing on the carrying belt, the coins are sandwiched like a wedge between the first guiding wall 16 and the second guiding wall 18 and stopped.

In a case in which the allowed flatness of the first guiding wall 16 and the second guiding wall 18 is taken into consideration in order to solve these problems, it is conceivable to determine the first guiding wall 16 and the second guiding wall 18 so that, when two coins are juxtaposed, the coins are not sandwiched. However, coin diameters are set depending on the countries, and there are many combinations. Therefore, the interval between the first guiding wall 16 and the second guiding wall 18 has to be determined for each country, and this cannot be promptly employed for a global product, which is a problem. If the interval between the first guiding wall 16 and the second guiding wall 18 is determined for each country, an interval adjusting mechanism is required, and this measure cannot be promptly employed since cost is increased.

It is conceivable to increase the interval between the first guiding wall 16 and the second guiding wall 18 so that the coins do not fit between the first guiding wall 16 and the second guiding wall 18 even when the coins of all the countries are juxtaposed. However, this cannot be employed since the size of the apparatus is increased.

In the second conventional technique, since the coins are inevitably tilted by a predetermined angle or more because the lower end parts of the guiding walls are tilted, the situation that the coins are rotated in the state in which the coins are leaning on the guiding walls and standing is eliminated. However, the problem that two coins in a juxtaposed state are sandwiched between the pair of guiding walls and cannot be dispensed to the coin receiving opening cannot be solved as well as the first conventional technique.

In the third conventional technique, there is an advantage that the coins can be quickly carried to the coin receiving opening by the combination with the movement of the flat belt since the flat belt is disposed so that the front side thereof is lowered. However, the problem that the two coins in a juxtaposed state are sandwiched between the pair of guiding walls and cannot be dispensed to the coin receiving opening cannot be solved as well as the first conventional technique.

In the fourth conventional technique, delay of dispensing or non-dispensing due to rotations can be eliminated since the coins rotating on the belt are brought into contact with and toppled by the string member. However, since the guiding walls of the coins are disposed to be parallel to each other, the problem that the two coins in a juxtaposed state are sandwiched between the pair of guiding walls and cannot be dispensed to the coin receiving opening cannot be solved as well as the first conventional technique.

In the fifth conventional technique, delay of dispensing or non-dispensing due to rotations can be eliminated since the coins rotating on the belt are brought into and toppled by the coin toppling member. However, since the guiding walls of the coins are disposed to be parallel to each other, the problem that two coins in a juxtaposed state are sandwiched between the guiding walls and cannot be dispensed to the coin receiving opening cannot be solved as well as the first conventional technique.

It is the object of the present invention to provide a coin payment apparatus that prevents coins from being sandwiched between a pair of guiding walls and not dispensed even when the coins are juxtaposed on a carrying belt, where quick dispensing of the coin is possible and collision sound and noise generation is small.

### [Means to Solve the Problems]

This object is achieved by the coin payment apparatus having the features of claim 1. The present invention is further developed as defined in the dependent claims.

### [Effects of the Invention]

The lower end of the first guiding wall or the second guiding wall is formed so as to be more distant from the first guiding wall or the second guiding wall as it gets closer to the coin receiving opening. In other words, the lower end of the first guiding wall or the second guiding wall is formed so as to have a fan shape widened toward the moving direction of the carrying belt even when the allowed flatness of the guiding walls is taken into consideration. Therefore, even when the coins are juxtaposed and positioned on the carrying belt, the interval between the first guiding wall and the second guiding wall is larger than the width of the juxtaposed coins in the coin-carrying-direction downstream position of the position at which the coins are juxtaposed; therefore, the phenomenon that the juxtaposed coins are sandwiched and stuck between the first guiding wall and the second guiding wall does not occur. Therefore, there is an advantage that the object of the invention of the present application that the coins are prevented from being sandwiched and stopped still between the pair of guiding walls even in the case in which the coins are juxtaposed on the carrying belt, can be achieved.

Furthermore, even if the coins are standing on the carrying belt, the slope that sequentially gets closer to the opposing first guiding wall or second guiding wall as it gets closer to the lower side is formed on the lower part of at least one of the first guiding wall and the second guiding wall, and the angle of the slope is an angle that prevents the coin from rotating in the standing state. In other words, in the state in which the standing coin is leaning on the slope, the coin cannot continue standing and is toppled, and, finally, the coin is brought into surface contact with the carrying belt and carried toward the coin receiving opening. Therefore, since at least one guiding wall of the first guiding wall or the second guiding wall has a slope, the probability that the coin continues the standing state is reduced by half by a simple calculation; therefore, the coin is brought into surface contact with the carrying belt in a short period of time and is quickly dispensed to the coin receiving opening; therefore, there is an advantage that the second object serving as the subordinate object of the invention of the present application can be also achieved. The coins delivered one by one from the dispensing opening of the coin dispenser are dropped in the dispensing space, which is formed by the first guiding-wall and the second guiding wall disposed to be parallel to each other at a predetermined interval therebetween, and are dropped onto the carrying belt. The dropped coins are brought into surface contact with the carrying belt and dispensed. Herein, the coin dispensed from the coin dispenser at the position opposed to the slope is guided by the first guiding wall and the second guiding wall, which are disposed to be parallel to each other, at the beginning of the drop, and, then, the coin is guided by the slope. When the first guiding wall and the second guiding wall are disposed to be parallel to each other, the coin delivery opening through which the coin from the coin dispenser passes can have a sufficient size is not required to have a special shape even when a buffer is disposed therebetween, production thereof is easy, and there is an advantage that the coin carrying and guiding device of the coin payment apparatus can be formed at low cost, which is the subordinate object of the present invention.

### [Brief Description of Drawings]

[FIG. 1] FIG. 1 is a perspective view of the overview of a coin acceptance and payout apparatus of a first embodiment of the present invention.
[FIG. 2] FIG. 2 is a perspective view of a coin dispenser.
[FIG. 3] FIG. 3 is a cross-sectional view of a plane P of FIG. 2.
[FIG. 4] FIG. 4 is a plan view of a state in which a coin storing container of the coin dispenser is removed.
[FIG. 5] FIG. 5 is a plan view of the overview of the coin acceptance and payout apparatus of the first embodiment of the present invention.
[FIG. 6] FIG. 6 is a cross-sectional view of a line A-A of FIG. 5.
[FIG. 7] FIG. 7 is a perspective view of a buffer device of the coin acceptance and payout apparatus of the first embodiment of the present invention.
[FIG. 8] FIG. 8 is a cross-sectional view of a line B-B of FIG. 5.
[FIG. 9] FIG. 9 is a cross-sectional view of a line C-C of FIG. 7.
[FIG. 10] FIG. 10 is an example of a first buffer of the buffer device.
[FIG. 11] FIG. 11 is an exploded perspective view of the first buffer of the buffer device.
[FIG. 12] FIG. 12 is a plan view of an attachment part of the buffer.
[FIG. 13] FIG. 13 is a cross-sectional view of a line D-D of FIG. 12.
[FIG. 14] FIG. 14 is a cross-sectional view of a line E-E of FIG. 12.
[FIG. 15] FIG. 15 is an explanatory drawing of working of the buffer device of the first embodiment of the present invention.
[FIG. 16] FIG. 16 is a plan view of a coin acceptance and payout apparatus of an example of the present invention.
[FIG. 17] FIG. 17 is a perspective view of a second guiding wall of a coin carrying and guiding device.
[FIG. 18] FIG. 18 is a cross-sectional view of a line F-F of FIG. 16.
[FIG. 19] FIG. 19 is a cross-sectional view of a line G-G of FIG. 16.
[FIG. 20] FIG. 20 is an example of a coin carrying and guiding device; wherein, (A) is a plan view, (B) is a cross-sectional view of a line H-H of (A), and (C) is a cross-sectional view of a line I-I of (A);
[FIG. 21] FIG. 21 is a perspective view for explaining a conventional technique.
[FIG. 22] FIG. 22 is a plan view for explaining the conventional technique.
[FIG. 23] FIG. 23 is a cross-sectional view of a line H-H of FIG. 21.

### [Description of Embodiments]

A best mode of a coin dispenser of the present invention is a coin carrying and guiding device of a coin payment apparatus that has a first coin dispenser row and a second coin dispenser row, in which a plurality of coin dispensers having dispensing openings for delivering stored coins one by one are juxtaposed along a straight line intersecting with the delivery direction line, juxtaposed at a predetermined interval so that the delivery direction lines of the first coin dispenser row and the second coin dispenser row are directed toward the opposing coin dispenser row; has a carrying belt moved toward a coin receiving opening is disposed between the first coin dispenser row and the second coin dispenser row; has the carrying belt forming three-dimensional-box-shape dispensing space above the carrying belt by disposing a first guiding wall vertically standing below the dispensing opening of the first coin dispenser row and a second guiding wall disposed in parallel to the first guiding wall and vertically standing below the dispensing opening of the second coin dispenser row; and drops the coin delivered from the coin dispenser constituting the first coin dispenser row or the second coin dispenser row onto the carrying belt and then carries the coin toward the coin receiving opening by the single carrying belt while the coin is guided by the first guiding wall and the second guiding wall; wherein
a lower part of at least one of the first guiding wall and the second guiding wall distant from the coin receiving opening is formed from a plate by sheet-metal processing so that the lower the lower part, the lower part is tilted so as to sequentially get closer to the opposing first guiding wall or second guiding wall; and the closer the lower part is to the coin receiving opening, the lower part gets away from the opposing first guiding wall or the second guiding wall; and the gap between lower ends of the first guiding wall and the second guiding wall opposed to the coin dispenser which is the farthest from the coin receiving opening exceeds the diameter of the coin delivered from the coin dispenser.

### [First Embodiment]

The present first embodiment is an example of use as a coin carrying and guiding device for payment of a coin acceptance and payout apparatus, which receives coins of 8 denominations, i.e. , 2 euros, which is the currency of European Union, 1 euro, 50 cents, 20 cents, 10 cents, 5 cents, 2 cents, and 1 cent, stores them separately by the denominations, pays a predetermined number of coins of a predetermined denomination(s) based on a pay-out order from the above described equipment.

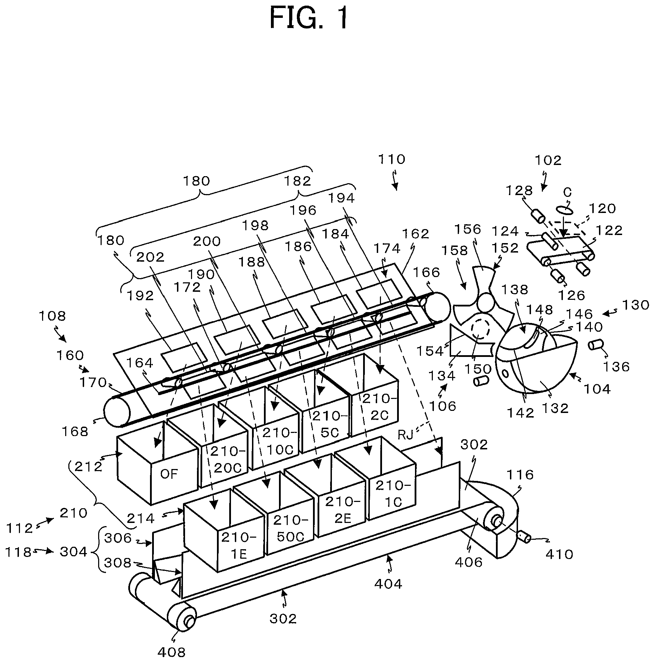

An outline of a coin acceptance and payout apparatus will be explained with reference to FIG. 1.

The coin acceptance and payout apparatus includes a coin receiving device 102 disposed in a frame 101, a coin separating and feeding device 104, a denomination discriminating device 106, a carrying device 108, a sorting unit 110, a coin storing unit 112, a payment device 114, and a coin receiving opening 116.

The invention of the present application relates to a coin carrying and guiding device 118 and the buffer device 300 of the payment device 114.

First, the coin receiving device 102 will be explained.

The coin receiving device 102 has a function to feed coins C of a plurality of denominations, which have been loaded in bulk into an inlet 120, to the coin separating and feeding device 104 of a next process within a range that the coins do not exceed a predetermined amount per unit time.

Specifically, the coin receiving device 102 includes a depositing flat belt 122, a collapsing roller 124, and a first electric motor 126 which drives the depositing flat belt 122.

The depositing flat belt 122 has a width about two times a maximum coin diameter, is stretched between a pair of rollers, and is provided to slightly have an upward slope.

The depositing flat belt 122 can be moved in a forward-rotation direction in which the coins are carried forward by the first electric motor 126 and in a backward-rotation direction in which the coins are returned.

The collapsing roller 124 is disposed above an intermediate portion of the depositing flat belt 122 with a gap of about three times a thinnest coin provided between the roller and the depositing flat belt 122.

When the depositing flat belt 122 is moved in a carrying direction, the lower surface of the collapsing roller 124 is rotated in the opposite direction of the moving direction of the depositing flat belt 122; and the collapsing roller 124 is configured to be in a still state when the depositing flat belt 122 is moved in a returning direction.

By virtue of this, when three or more thinnest coins overlapped with one another on the depositing flat belt 122 reaches the collapsing roller 124, the uppermost coin thereof is moved in the returning direction and shoved and dropped by the collapsing roller 124, wherein they are regulated so that many coins C are not dropped to the coin separating and feeding device 104 at once.

A photoelectric sensor 128, which is a coin detecting device, is disposed so that a light axis thereof goes across slightly above the depositing flat belt 122, which is below the inlet 120.

When the light axis of the photoelectric sensor 128 is interrupted, it is considered that the coin(s) C is loaded, and the first electric motor 126 is driven to move the depositing flat belt 122 in a depositing direction.

When a full sensor 136 of the later-described coin separating and feeding device 104 detects a full state, the first electric motor 126 is stopped.

Therefore, the coin separating and feeding device 104 can stably feed coins separately one by one without receiving the coins exceeding the full amount from the coin receiving device 102.

Note that the photoelectric sensor 128 can be replaced by a magnetic sensor installed below the depositing flat belt 122.

Next, the coin separating and feeding device 104 will be explained.

The coin separating and feeding device 104 has a function to separate the coins C of the plurality of denominations, which have been received in bulk from the coin receiving device 102, one by one and feed them to a next process.

The coin separating and feeding device 104 is disposed below the coin receiving device 102 and includes a rotating disk 130, a coin storing container 132, a coin receiver 134, and the full sensor 136.

The rotating disk 130 has a receiving unit 138, which receives the coins C one by one, is disposed to be tilted at a predetermined angle, and is rotated at a predetermined speed.

In the receiving unit 138, a Y-shaped plate 146 in which three concave parts 142 are formed at regular intervals is fixed to the upper surface of a rotating disk 140 to be concentric with the rotating disk 140.

If the diameter of the rotating disk 140 is increased, the number of the receiving unit(s) 138 can be increased to 4 or more. If the diameter of the rotating disk 140 is reduced, the number of the receiving unit(s) 138 can be reduced to 2 or less.

A pusher 148, which carries out pivotal motions, is disposed on one side of the concave part 142 (for example, see Japanese Patent No. 4784806).

In other words, the receiving unit 138, which is approximately semicircular, is formed by the pushers 148 and the concave parts 142.

The receiving unit 138 is set to have a size by which two juxtaposed minimum diameter coins cannot be received and only one maximum diameter coin can be received.

The pusher 148 is normally positioned in a still state at a position close to one side of the concave part 142 so as to form the receiving unit 138. When the pusher 148 carries out a pivotal motion and is moved to a predetermined position, the pusher 148 feeds the coin, which has been held, to the circumferential direction of the rotating disk 140.

It is preferred to carry out this movement of the pusher 148 by, for example, a groove cam by utilizing rotary motions of the rotating disk 140.

The receiving unit 138 receives the coins C, which have been stored in bulk, one by one by a lower part opposed to the coin storing container 132, and, at a predetermined position above the rotation center of the rotating disk 130, the pusher 148 pushes the coin C of the receiving unit 138 to the circumferential direction and passes the coin to the coin receiver 134 having a knife shape.

The rotating disk 130 is rotated at a predetermined speed by an unshown electric motor via a decelerator.

The full sensor 136 has a function to output a full signal when the amount of the coins in the coin storing container 132 becomes a predetermined amount or more and is, for example, a transmission-type photoelectric sensor.

When the full sensor 136 outputs the full signal, the first electric motor 126 is stopped, and supply of the coins C from the coin receiving device 102 is stopped.

When the full sensor 136 stops outputting the full signal, the first electric motor 126 is restarted, and the coins C on the depositing flat belt 122 are supplied to the coin storing container 132.

Next, the denomination discriminating device 106 will be explained.

The denomination discriminating device 106 has a function to discriminate the authenticity and denomination of the coins C, which have been fed one by one from the coin separating and feeding device 104.

The denomination discriminating device 106 has a function to discriminate the authenticity and denomination of the coins C based on detection data of physical information about the material, thickness, diameter, etc. of the coins obtained by a magnetic sensor 150.

The denomination discriminating device 106 includes the magnetic sensor 150, a slide base (not shown) disposed in the same plane as the upper surface of the rotating disk 140, an impeller 152 for feeding the coins C, and a detection guide 154.

The slide base has a function to guide one side of the coin C pushed by the impeller 152.

The impeller 152 has a function to move the coins C received from the coin separating and feeding device 104 and passes the coins through a coin holding part 158 one by one.

Furthermore, the impeller 152 has a function to pass the coins C, which have passed through the coin holding part 158, to the carrying device 108.

The impeller 152 is parallel to the slide base, is rotatable in a close plane, forms the coin holding part 158 with three pushers 156 disposed at regular intervals by the same number as the receiving units 138, and has a Y-shape.

The detection guide 154 has a function to linearly guide the coin C, which is opposed to the coin holding part 158 and passes therethrough, and fix the position of the coin C with respect to the magnetic sensor 150.

Next, the carrying device 108 will be explained.

The carrying device 108 has a function to carry the coins C, of which authenticity and denomination have been discriminated, to the sorting unit 110.

The carrying device 108 includes an endless carrier 160, which is moved in one direction in a single plane; a slide plate 162, on which one side of the coin C pushed by the endless carrier 160 slides; and a straight guide rail 164, which guides the peripheral surface of the coin C.

The slope angle of the slide plate 162 is preferred to be about 45 degrees in order to downsize the whole coin acceptance and payout apparatus. The endless carrier 160 is a chain 170 stretched between a first sprocket 166 and a second sprocket 168 disposed at a predetermined interval. However, the endless carrier 160 may be a belt.

The chain 170 is installed in a flattened running-track shape, and the first sprocket 166 is disposed immediately lateral to the impeller 152 of the denomination discriminating device 106.

The chain 170 is preferred to be a metal chain from the viewpoints of durability and cost, but may be made of resin.

Pushing pins 172 are fixed to a lateral side of the chain 170 at predetermined intervals.

The plurality of pushing pins 172 are attached to the chain 170 at the intervals corresponding to the intervals of the pushers 156.

The first sprocket 166 is rotated at a predetermined speed, and the pushers 156 and the pushing pins 172 are set so that the coins C pushed to a carrying path 174 of the pushing pins 172 by the pushers 156 are immediately pushed by the pushing pins 172. The carrying path 174 is a path in which the coins C are guided by the guide rail 164 and, at the same time, pushed by the pushing pins 172.

The guide rail 164 has a function to guide lower-end peripheral surfaces of the coins C so that the coins C, which are pushed by the pushing pins 172, are moved in the carrying path 174.

The guide rail 164 is disposed along and slightly below the chain 170, which has the straight shape of the upper side of the running-track shape.

The guide rail 164 is projecting in an orthogonal direction with respect to the slide plate 162 by slightly more than the maximum thickness of handled coins.

Therefore, the lower surfaces of the coins C pushed by the pushing pins 172 are guided by the slide plate 162, and the lower-end peripheral surfaces thereof are guided by the guide rail 164.

The guide rail 164 also serves as a sorting unit as described later.

The sorting unit 110 has a function to drop the coins C into predetermined coin sorting holes by denominations, respectively.

The sorting unit 110 has an upper sorting unit 180, which is disposed in the upper side of the guide rail 164 along the guide rail 164, and a lower sorting unit 182, which is disposed in the lower side along the guide rail 164.

In the upper sorting unit 180, a 2-cent-coin sorting hole 184, a 5-cent-coin sorting hole 186, a 10-cent-coin sorting hole 188, a 20-cent-coin sorting hole 190, and an overflowed-coin sorting hole 192 are disposed sequentially toward the moving direction of the carrying device 108.

In the lower sorting unit 182, a rejected-coin sorting hole 194, a 1-cent-coin sorting hole 196, a 2-euro-coin sorting hole 198, a 50-cent-coin sorting hole 200, and a 1-euro-coin sorting hole 202 are disposed sequentially toward the moving direction of the carrying device 108.

When the upper sorting unit 180 and the lower sorting unit 182 of the carrying device 108 are disposed in this manner, the coins C can be sorted at the same location of the carrying device 108 to the upper side and the lower side. Therefore, there are advantages that the carried distance of the coins can be shortened and that the coin acceptance and payout apparatus 100 can be downsized.

Note that, since the disposition of the denominations with respect to the coin sorting holes is an example, they can be freely disposed in accordance with needs.

Gate devices (not shown) actuated by electrical actuators are disposed at the coin sorting holes 184, 186, 188, 190, 194, 196, 198, 200, and 202, respectively. The gate devices of the coin sorting holes 194, 196, 198, 200, and 202 also serve as the guide rail 164.

More specifically, the guide rail 164 consists of a fixed guide fixed between the rejected-coin sorting hole 194, the 1-cent-coin sorting hole 196, the 2-euro-coin sorting hole 198, the 50-cent-coin sorting hole 200, and the 1-euro-coin sorting hole 202 and a movable guide which is electrically moved and normally has a single straight-line shape.

When the carried coins are to be dropped to the coin sorting holes 194, 196, 198, 200, and 202, the movable guide is moved from a normal position so that the carried coins are not guided to the movable guide but are dropped to the predetermined coin sorting holes (see Japanese Patent No. 4997374).

The gate devices opposed to the coin sorting holes 184, 186, 188, 190, 194, 196, 198, 200, and 202 are selectively opened/closed based on timing signals from a timing sensor (not shown) and the authenticity and denomination discriminated according to the coin information detected by the coin holding part 158.

As a result, the coins C carried by the carrying device 108 are dropped into the predetermined coin sorting holes corresponding to the denominations, respectively.

The coin storing unit 112 has a function to store the coins C, which have been sorted by the sorting unit 110, separately by the denominations. The coin storing unit 112 is formed by arranging, in two rows, a first coin dispenser row 212 and a second coin dispenser row 214, which are parallely juxtaposed, wherein coin dispensers 210, which dispense the coins C one by one by rotating disks, are opposed to the upper sorting unit 180 and the lower sorting unit 182 respectively by the denominations below the sorting unit 110.

The "first" and "second" of the first coin dispenser row 212 and the second coin dispenser row 214 are imparted for distinguishing them and do not have particular meanings in terms of interpretation of rights.

The coin dispensers 210 are shown by a reference sign 210 with the denominations thereof.

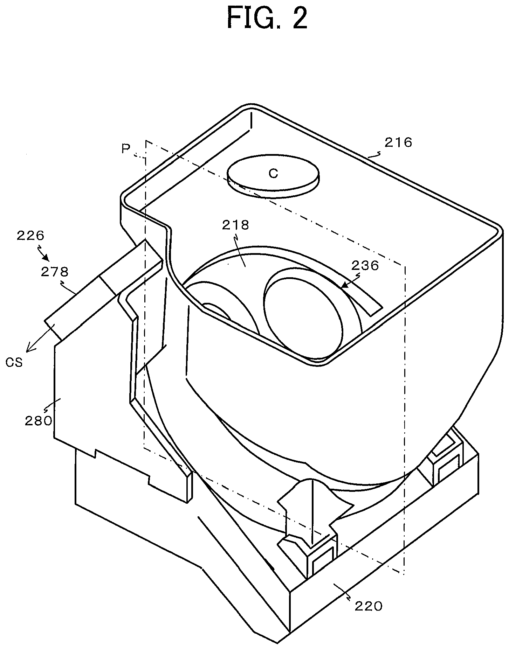

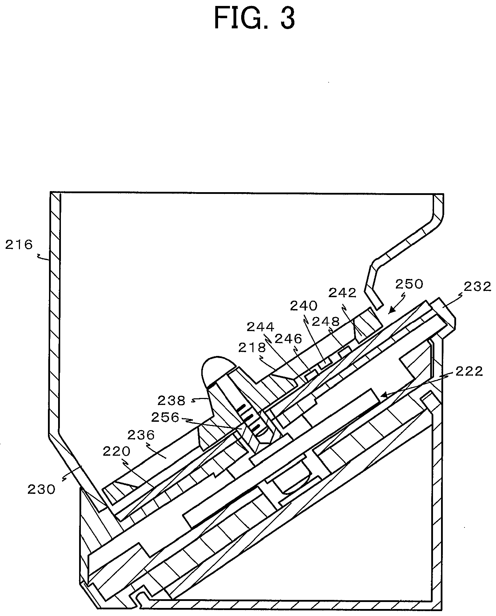

An example of the coin dispenser 210 constituting the first coin dispenser row 212 and the second coin dispenser row 214 will be explained with reference to FIGs. 2 to 4.

The coin dispenser 210 has a function to sort and dispense the stored coins C one by one and a function to output detection signals of the dispensed coins C.

The coin dispenser 210 includes a tubular coin storing container 216 for storing the coins C, a rotating disk 218 for sorting the coins C one by one disposed at a bottom part of the coin storing container 216, a flat-board-shaped base 220 on which the coins C rotated together by the rotating disk 218 slide, a second electric motor 222 for subjecting the rotating disk 218 to rotary drive, an ejector 224 which ejects the coins C, and a later-described coin detector 226.

First, the coin storing container 216 will be explained.

The coin storing container 216 has a vertical tubular shape as a whole, has an approximately rectangular upper end part, has a bottom end part which is a circular bottom hole 230, and has a function to store many coins C in bulk.

The coin storing container 216 is detachably attached to the upper surface of a later-described base frame 232.

Next, the rotating disk 218 will be explained.

The rotating disk 218 has a function to stir the coins C in the coin storing container 216 and sort the coins C one by one.

The rotating disk 218 is rotatably disposed in a tilted state in a circular hole 234 of the base frame 232 in the lower side of the coin storing container 216.

The rotating disk 218 has a plurality of through holes 236 disposed at predetermined intervals, a pyramidal stirrer 238 at a center part of the upper surface thereof, a first pusher 240 of the coins C on the lower surface thereof, and a second pusher 242.

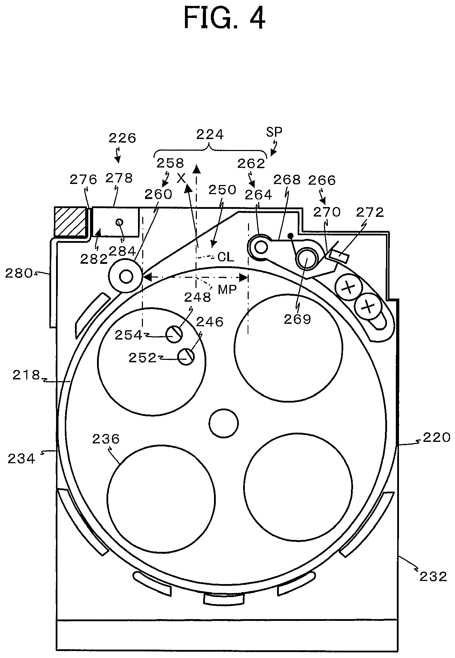

Therefore, the coin C dropped into the through hole 236 is held on an upper surface 244 of the base 220. Upon coin dispensing, the coin is pushed by the first pusher 240 on the back side of the rotating disk 218, which is rotated forward in a counterclockwise direction in FIG. 4, and is turned in the counterclockwise direction together with the rotating disk 218 while the circumferential edge thereof is guided by the circular hole 234.

Movement of the coin C, which is rotated together therewith, is prevented by pins 246 and 248 projecting at predetermined positions of the upper surface 244 of the base 220, and the coin is guided to the circumferential direction of the rotating disk 218.

The circular hole 234 at this position is cut out to form a dispensing opening 250. Therefore, the pushed coin C can be moved to outside the circular hole 234.

The pins 246 and 248 are biased by springs (not shown) so as to project from the lower side of the base 220 to the upper surface 244 , and slopes 252 and 254 are formed on upper end parts thereof in the opposite side of the side that is opposed to the forward-rotation direction of the rotating disk 218.

Therefore, when the rotating disk 218 is rotated backward, since the slopes 252 and 254 are pushed by the coin C, the pins 246 and 248 are pushed down to the lower side against the spring force.

Therefore, the coins C are prevented from being moved over the pins 246 and 248, moved in the clockwise direction together with the rotating disk 218, and dispensed from the dispensing opening 250.

The rotating disk 218 is attached to an upper end part of a rotating shaft 256, which is rotatably attached to penetrate through the base 220, so that the rotating disk 218 cannot be slid in the axial direction thereof and cannot be rotated with respect to the rotating shaft 256.

Specifically, by interposing a shim having a low friction coefficient between the rotating disk 218 and the upper surface 244 of the base 220, the distance therebetween can be adjusted, and adjustment to the position of the rotating disk 218 corresponding to the thickness of the coins C can be carried out.

The position adjuster of the rotating disk 218 with respect to the thickness of the coins C is the above described shim or can be changed to another device having the same function.

Next, the base 220 will be explained.

The base 220 has a function to guide the coins C, which are rotated together by the rotating disk 218, by the flat upper surface 244.

The base 220 is fixed in the circular hole 234 at the center of the upper surface of the base frame 232 having a rectangular box shape and is tilted within the range of about 30 degrees to 40 degrees so that the dispensing-opening-250 side is high.

This slope angle is preferred to be smaller since the coin storage amount of the coin storing container 216 is increased.

However, if the slope angle is small, the degree of influence of the diameter of the rotating disk 218 on the size of the coin dispenser 210 is increased. Therefore, the minimum slope angle is about 30 degrees, and the maximum slope angle is about 60 degrees since a large slope angle reduces the dispensing efficiency of the coins.

The circular hole 234 and the bottom hole 230 of the lower end part of the coin storing container 216 are formed to have the same diameter and are integrated with each other.

The base frame 232 has a box shape, and the second electric motor 222, etc. are disposed in the space therein.

Next, the second electric motor 222 will be explained.

The second electric motor 222 has a function to rotate the rotating disk 218 in the forward-rotation direction and the backward-rotation direction and a function to stop the rotating disk 218.

The second electric motor 222 is disposed in the internal space of the base frame 232.

An electric motor, an air motor, an oil motor, etc. can be used as the second electric motor 222, and the electric motor is the most preferred in terms of downsizing and controllability.

The second electric motor 222 may use a power source of direct current or alternating current, and various motors such as an induction motor can be used as a motor type. However, since it can be rotated forward/backward and from the viewpoints of downsizing, maintainability, and durability, a brushless DC motor is preferred.

According to instructions from a higher-level control device (not shown), the second electric motor 222 carries out forward rotation for dispensing the coins C, backward rotation for eliminating coin jamming, and stop or rapid stop by causing reverse-direction rotating force to work momentarily upon forward or backward rotation.

An output shaft (not shown) of the second electric motor 222 rotates the rotating shaft 256, which is rotatably attached to the base frame 232 in a vertical state, via a deceleration mechanism (not shown).

Therefore, the rotating disk 218 is rotated in the forward-rotation direction by the forward rotation of the second electric motor 222, is rotated in the backward-rotation direction by the backward rotation thereof, and stops rotating when the second electric motor 222 is stopped.

Next, the ejector 224 will be explained.

The ejector 224 has a function to eject the coins C one by one in a predetermined direction. The ejector 224 has a function to eject the coins C, which are fed one by one by the rotating disk 218, to the predetermined direction with momentum.

The ejector 224 is disposed to be adjacent to the rotating disk 218 and opposed to the dispensing opening 250.

The ejector 224 consists of a fixed roller 260 serving as a fixed guide 258, which has one side practically disposed in a fixed state with respect to the base 220, and a movable roller 264 serving as a movable guide 262, which is biased so as to get closer to the fixed-guide-258 side. Immediately after the diameter part of the coin C passes the part between the rollers, the coin C is swiftly ejected by the biasing force applied to the movable roller 264 by a biasing device 266.

The ejecting direction of the coin C of the ejector 224 directs the direction of the ejecting direction line of an arrow X in FIG. 4. However, the ejecting direction of the coin C is not limited to the direction of the ejecting direction line X, but is variously changed depending on, for example, the sandwiching condition of the coin C, the fixed roller 260, and the movable roller 264.

Next, the biasing device 266 will be explained.

The biasing device 266 has a function to apply predetermined biasing force to the movable guide 262.

In the biasing device 266, a lever 268 having a tip to which the movable roller 264 is rotatably attached is attached to a fixed shaft 269 so as to be able to carry out pivotal motions, and the lever 268 is biased by a spring 270 so as to get close to the fixed roller 260. Therefore, the spring 270 is the biasing device 266.

The lever 268 is latched by a stopper 272 at a position where the movable roller 264 is close to the rotating disk 218, and the lever 268 is held at a standby position SP (the position shown in FIG. 4).

When the movable roller 264 is positioned at the standby position SP, the interval between the fixed roller 260 and the movable roller 264 is set to be smaller than the diameter of the coin C to be dispensed.

On the other hand, one side of the coin C, which is pushed in the circumference direction of the rotating disk 218 by the first pusher 240 while being guided by the pins 246 and 248, is guided by the fixed roller 260. Therefore, the coin turns the movable roller 264 in the clockwise direction in FIG. 4, and, as a result, the lever 268 is turned in the clockwise direction.

The spring force of the spring 270 is accumulated along with the clockwise-direction turning of the lever 268.

Immediately after the diameter part of the coin C passes the part between the fixed roller 260 and the movable roller 264, the lever 268 is rapidly turned in the counterclockwise direction by the spring force accumulated by the spring 270. Therefore, the coin C is ejected in the direction of the ejecting direction X and is ejected to dispensing space 274 through the dispensing opening 250, a coin delivery position 296, and a coin delivery opening 311.

Specifically, since the coin C is ejected along the tilted base 220, the coin is ejected obliquely upward, is moved toward a later-described detection passage 282, is rarely collided with and rebounded by a rebounder 276, and is then dispensed.

Next, the coin detector 226 will be explained.

The coin detector 226 has a function to detect the coin C, which is ejected by the ejector 224, and output a coin signal CS.

The coin detector 226 detects the coins C, which have been ejected one by one by rotation of the rotating disk 218 and the ejector 224, without contact and outputs the coin signals CS to the higher-level control device such as a POS register (not shown) and a control device of its own. When the control device of its own detects the number of the coin signals CS of the number specified by the higher-level control device, the control device of its own stops power feed to the second electric motor 222 in order to prevent excessive dispensing of the coins.

A photoelectric type, an electromagnetic type, a sound-wave type, etc. can be used as the coin detector 226. However, from the viewpoint of low-maintenance, an electromagnetic coin detecting device 278, which is not easily affected by dirt, dust, etc., is preferred to be used.

The electromagnetic coin detecting device 278 is attached to the base frame 232, which is lateral to the ejector 224, via a later-described bracket 280.

Next, the electromagnetic coin detecting device 278 will be explained.

The electromagnetic coin detecting device 278 a lower detecting part, which has a rod shape and is approximately horizontally disposed in the lower side, and an upper detecting part, which is juxtaposed with the lower detecting part with a predetermined interval therebetween. The lower detecting part and the upper detecting part are connected by a connecting part extending in a top-bottom direction. A detection passage 282 having a transverse gate shape is provided between the upper detecting part and the lower detecting part. Thus, the electromagnetic coin detecting device 278 is formed into a channel shape as a whole.

The upper surface of the lower detecting part is positioned in the same plane as the upper surface of the base frame 232.

The detection passage 282 is disposed to include a moving path of the coin C ejected by the ejector 224.

If the ejecting direction of the coin C is deviated, the coin C is moved while being guided by the upper surface of the lower detecting part, the lower surface of the upper detecting part, and the rebounder 276.

A sensor 284 for coin detection is disposed to be opposed to the lower detecting part and the upper detecting part.

In the case of the electromagnetic coin detecting device 278, a magnetic coil is disposed. In the case of a photoelectric coin detecting device, a phototransmitter/photoreceiver is disposed.

The electromagnetic coin detecting device 278 is fixed to the bracket 280 made of metal, which is fixed to a lateral side of the base frame 232.

Next, the rebounder 276 will be explained.

The rebounder 276 has a function to collide with and rebound the coin C, which is ejected by the ejector 224.

The rebounder 276 is formed into a rectangular flat-plate shape by projecting part of the bracket 280.

The rebounder 276 is inserted in the detection passage 282 of the electromagnetic coin detecting device 278 and is disposed to be adjacent to a lateral side of the connecting part.

In other words, the rebounder 276 is disposed in the back part of the detection passage 282 and entirely covers the lateral side of the connecting part.

The rebounder 276 can be fixed to the lateral side of the connecting part and integrated with the electromagnetic coin detecting device 278.

In the above described coin dispenser 210, the second electric motor 222 is rotated, and the rotating disk 218 is rotated in the counterclockwise direction in FIG. 4 via the deceleration mechanism.

By this rotation, the coin C, which has been dropped into the through hole 236, is pushed and rotated together by the first pusher 240.

In the process of the rotation of the coin C together therewith, the coin C is guided in the circumference direction of the rotating disk 218 by the pins 246 and 248 and ejected by the ejector 224.

In this process, the coin C is guided by the base 220. Therefore, based on the slope of the base 220, the coin C is ejected approximately in the direction of the ejecting direction line X obliquely upward. However, the ejecting direction of the coin C is largely varied depending on various conditions.

Some of the ejected coins C are moved to the detection passage 282 and collide with the rebounder 276 at an acute incident angle.

The collided coins C are rebounded in a predetermined direction, in other words, at an angle approximately the same as the incident angle.

When the coin C is opposed to the sensor 284, the electromagnetic coin detecting device 278 outputs the coin signal CS.

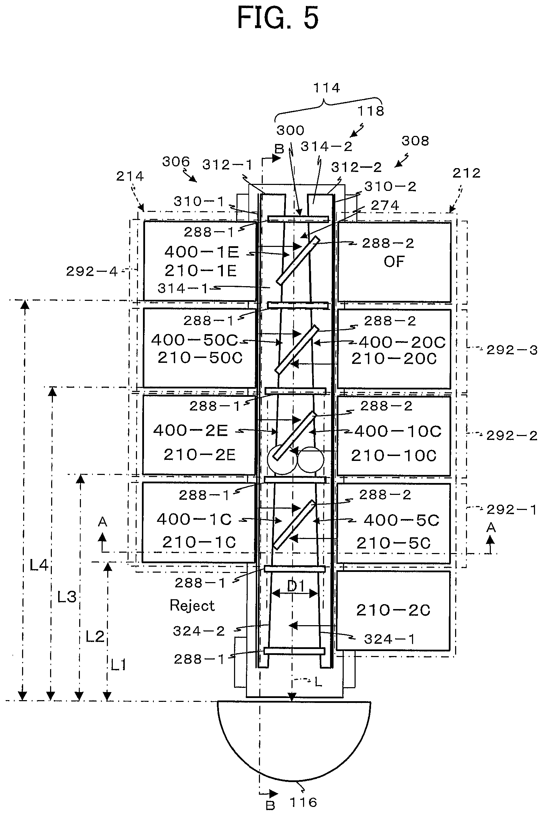

The positional relation of the coin dispensers 210 which belong to the first coin dispenser row 212 and the second coin dispenser row 214 is set so that the distances from the coin receiving opening 116 are the same. As shown in FIG. 5, the 5-cent coin dispenser 210-5C and the 1-cent coin dispenser 210-1C constitute a first coin dispenser pair 292-1 and are installed at the same first distance L1 from the coin receiving opening 116.

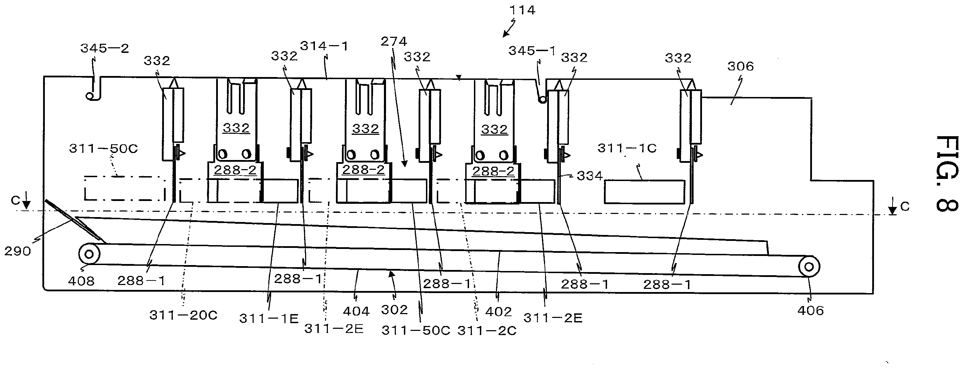

Furthermore, the 5-cent coin dispenser 210-5C and the 1-cent coin dispenser 210-1C are disposed to be opposed to each other with the coin carrying and guiding device 118 (dispensing space 2 74) interposed therebetween, and the dispensing openings 250 thereof are deviated from each other along the coin carrying and guiding device 118, in other words, an extending direction line L of a later-described carrying belt 302. The extending direction line L is a straight line shown along the extending direction of the carrying belt 302 and may be, for example, the width-direction center line of the carrying belt 302. Therefore, as shown in FIG. 8, the coin delivering openings 311 formed in a first guiding wall 306 and a second guiding wall 308 to correspond to the dispensing openings 250 are also disposed to be deviated from each other; however, part of them is overlapped. The coin delivering openings 311 corresponding to the coins C are shown by the reference sign 311 with respective denominations.

Similarly, the 2-euro coin dispenser 210-2E and the 10-cent coin dispenser 210-10C constitute a set of second coin dispensers 292-2 and are installed at the same second distance L2 from the coin receiving opening 116.

The 20-cent coin dispenser 210-20C and the 50-cent coin dispenser 210-50C constitute a set of a third coin dispenser pair 292-3 and are installed at the same third distance L3 from the coin receiving opening 116.

Furthermore, the 1-euro coin dispenser 210-1E and an overflow box 0F constitute a set of a fourth opposed device pair 292-4 and are installed at the same fourth distance L4 from the coin receiving opening 116. When the coin dispensers 210 are disposed to be opposed to each other at the same distance from the coin receiving opening 116 in this manner, there is an advantage that the size of the coin acceptance and payout apparatus 100 can be reduced.

Next, the payment device 114 will be explained.

The payment device 114 has a function to carry the coin C, which is delivered from the coin dispensers 210 of the respective denominations, to the coin receiving opening 116 as quickly as possible.

Specifically, the payment device 114 has a function to promptly converge the behavior of the coin C, which is ejected from the coin dispenser 210, quickly brings the coin to surface contact with the upper surface of the carrying belt 302, and carry the coin to the coin receiving opening 116 by the carrying belt 302. In the present first embodiment, the payment device 114 includes the coin carrying and guiding device 118, a buffer device 300, and the carrying belt 302.

First, the coin carrying and guiding device 118 will be explained.

The coin carrying and guiding device 118 has a function to guide the coin C, which is delivered from the coin dispensers 210, onto the carrying belt 302 and guide the coin C, which is carried by the carrying belt 302. In the present first embodiment, the coin carrying and guiding device 118 consists of the first guiding wall 306 and the second guiding wall 308, which are a pair of guiding walls 304.

Specifically, the lower parts of the first guiding wall 306 and the second guiding wall 308 distant from the coin receiving opening 116 are formed so as to be sequentially tilted so as to get closer to the opposing first guiding wall 306 or second guiding wall 308 as they get closer to the lower side and get distant from the first guiding wall 306 or second guiding wall 308 as they get close to the coin receiving opening 116.

In the present first embodiment, the first guiding wall 306 and the second guiding wall 308 have the same structures, but merely disposed symmetrically. Therefore, the first guiding wall 306 will be representatively explained, and "-1" of the same reference signs can be replaced and explained by "-2".

The first guiding wall 306 is formed by a first vertical guiding wall 310-1, which is vertical with respect to the carrying belt 302, and a first slope 314-1 of a first toppler 312-1, which has a right-triangle cross section and is extending along the first vertical guiding wall 310-1.

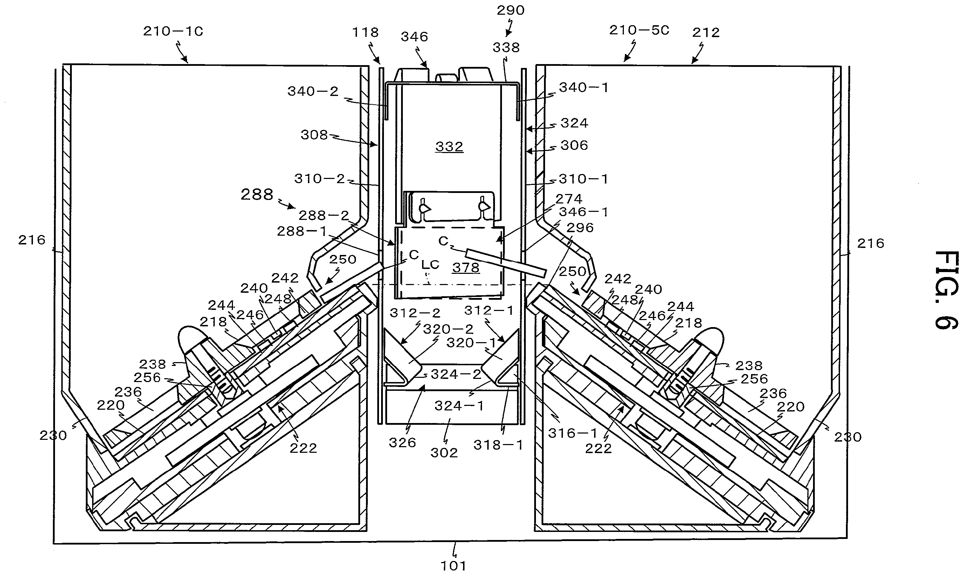

First, the first vertical guiding wall 310-1 will be explained with reference to FIG. 6 and FIG. 7.

The first vertical guiding wall 310-1 is a transversely-rectangular flat plate and is preferred to employ a zinc-plating steel plate in terms of cost.

The first vertical guiding wall 310-1 is disposed along the first coin dispenser row 212 and the carrying belt 302 and is disposed so as to be vertical with respect to the upper surface of the carrying belt 302. "Vertical" means approximately vertical and does not mean vertical in a strict sense.

On the extension along the upper surface 244 of the dispensing opening 250 of the first vertical guiding wall 310-1, the coin delivery opening 311, which is transversely rectangular, is formed.

In other words, the first vertical guiding wall 310-1 and the second vertical guiding wall 310-2 are parallelly vertical on the carrying belt 302 with a predetermined interval therebetween, and the space surrounded by them is the box-shaped dispensing space 274, which is long in the extending direction of the carrying belt 302.

Therefore, the coin C, which is ejected by the coin dispenser 210, passes through the coin delivery opening 311 and reaches the dispensing space 274.

Next, the first toppler 312-1 will be explained with reference to FIG. 5 to FIG. 7.

The toppler 312-1 has a function to prevent, when the standing coin C leans on the first guiding wall 306, the coin C from continuing the standing state.

In other words, the first toppler 312-1 has a function to, when the standing coin C leans on the first guiding wall 306, actively topple the coin C by causing the vertical line of the gravity center of the coin C to be significantly deviated from the width of the coin C, which is in contact with the later-described carrying belt 302.

The first toppler 312-1 is a rod-like body having a right triangular cross section in the direction which is at the right angle with respect to the longitudinal thereof, and the first toppler 312-1 is disposed along the lower end part of the first guiding wall 306 and is integrated with the first guiding wall 306.

Specifically, as shown in FIG. 6, the first toppler 312-1 of the present first embodiment is a thin long plate material formed into a V-shape, and a first relief part 316-1 thereof is fixed to the first guiding wall 306 in a state that the part is in close contact with the first guiding wall 306.

More specifically, in the cross sectional shape of the first toppler 312-1, a first lower edge part 318-1 is transversely (in the present embodiment, horizontally) extended by a predetermined length from the first guiding wall 306 toward the second-guiding-wall-308 side and is then connected to a first slope part 320-1, which is directed upward and to the first-guiding-wall-306 side and extended by a predetermined length, thereby forming a transverse V-shape. The first relief part 316-1 is formed between the tips of the first lower edge part 318-1 and the first slope part 320-1, thereby forming a triangular pyramidal shape as a whole. The tapered side thereof is disposed in the coin-receiving-opening-116 side.

The first slope part 320-1 is extended in the longitudinal direction of the first toppler 312-1 to form a first slope 322-1.

A first lower edge 324-1 of the first slope 322-1 is formed so as to get away from the second guiding wall 308 as it gets closer to the coin receiving opening 116 even with consideration of linearity. Furthermore, in the present first embodiment, the width of the first slope 322-1 is also formed so as to be narrower as it gets closer to the coin receiving opening 116.

Therefore, the first guiding wall 306 is formed by the first vertical guiding wall 310-1 disposed in the upper side and the first slope 322-1 disposed in the lower side.

In other words, the part between upper parts 326 of the first guiding wall 306 and the second guiding wall 308 is disposed in parallel with a predetermined interval therebetween to form the dispensing opening 274, and the part between lower parts 328 is set so as to get close to the first slope 322-1 or the second slope 322-2 as it gets closer to the lower side.

Furthermore, an interval D1 between the first lower edge 324-1 of the first slope 322-1 and a second lower edge 324-2 of the second slope 322-2 is formed in a fan shape so that it is widened as it gets closer to the coin receiving opening 116.

Furthermore, the lower edge part 318-1 is disposed with an interval of less than the thickness of the thinnest coin C between the lower edge part and the upper surface 402 of the carrying belt 302 so that the coin C does not enter this interval.

Therefore, since the carrying belt 302 is tilted so that the front side thereof is lowered toward the coin-receiving-opening-116 side as described later, the first toppler 312-1 is similarly tilted so that the front side thereof is lowered toward the coin-receiving-opening-116 side.

Furthermore, the interval D1 between the first lower edge 324-1 and the second lower edge 324-2 opposed to the coin dispenser 210, which is the farthest from the coin receiving opening 116, is set to the distance that exceeds the diameter of the coin C, which is delivered from the coin dispenser 210 and is slightly smaller than two times that. This is for a reason that, if the interval D1 exceeds the diameter of the coin C, in a situation that the coin C is horizontally dropped, the coin C is immediately brought into surface contact with the carrying belt 302, and, even if the two coins C are positioned, the two coins are not juxtaposed on the carrying belt 302. In the present first embodiment, the coin dispenser 210, which is the farthest from the coin receiving opening 116, is for 1 euro; therefore, the interval is set with a range that is wider than the diameter 23.25 millimeters of a 1-euro coin and less than two times that.

In further detail, the interval D1 between the first lower edge 324-1 and the second lower edge 324-2 opposed to the coin dispenser 210, which is the farthest from the coin receiving opening 116, is preferred to be set in a range that is equal to or higher than the value obtained by adding the thickness of the coin to the diameter of the coin C, which is delivered at this position, to less than two times the diameter of the coin. This is for preventing the coins from being closely sandwiched in a situation that one of the coins C is in surface contact with the carrying belt 302 and the other coin C is standing.

The side of the fourth opposed device pair 292-4 that is opposite to the coin receiving opening 116 is closed by a back-part guiding plate 325, which is lowered in the front side toward the coin receiving opening 116.

Both of the first guiding wall 306 and the second guiding wall 308 are provided with the first slope 322-1 or the second slope 322-2. However, in the present invention, the first slope 322-1 or the second slope 322-2 may be provided in either one side. Therefore, either one of the first guiding wall 306 and the second guiding wall 308 is disposed in a vertical state with respect to the upper surface of the carrying belt 302 like conventional cases, and the coin C sometimes maintains a standing state; however, since the other one is formed into the first slope 322-1 or the second slope 322-2, the coin cannot maintain standing and is immediately toppled. Therefore, even by a simple calculation, there is an advantage that the probability of maintaining the standing state of the coin C can be reduced. Furthermore, if the first slope 322-1 and the second slope 322-2 are provided on both of the first guiding wall 306 and the second guiding wall 308, the size of the apparatus is increased by the amount corresponding to the slopes; however, if there is only one of the first slope 322-1 and the second slope 322-2, there is an advantage that the size of the apparatus can be reduced. Therefore, when the interval D1 between the first lower edge 324-1 of the first guiding wall 306 and the lower edge 324-2 of the second guiding wall 308 which are the farthest from the coin receiving opening 116 is set to the value that exceeds the diameter of the maximum diameter coin, which is expected to be used, there is an advantage that the apparatus can be used for the coins all over the world without adjusting the interval.

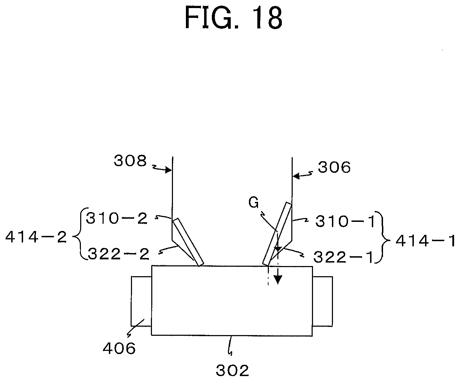

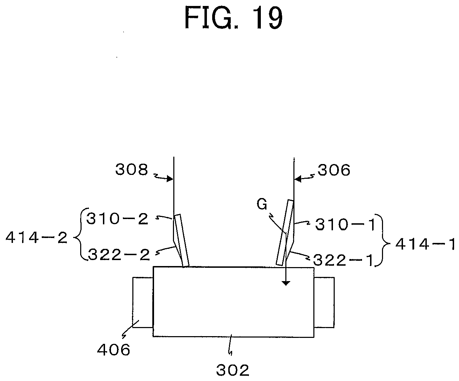

Next, working of the first toppler 312-1 and a second toppler 312-2 will be explained also with reference to FIGs. 18 and FIG. 19.

The coin C dropped onto the carrying belt 302 is carried toward the coin receiving opening 116 by movement of the carrying belt 302. In this carrying, if the coin C stands and leans on the first guiding wall 306 or the second guiding wall 308, since the first slope 322-1 or the second slope 322-2 is disposed at the lower end part of the first guiding wall 306 or the second guiding wall 308, the coin C leans on the first slope 322-1 or the second slope 322-2. If the coin C leans on the first slope 322-1 or the second slope 322-2, the coin C is largely tilted; therefore, the gravity center is thereof is significantly deviated in the lateral direction from the peripheral surface of the coin C, the coin cannot maintain the standing state and laid down, and the coin is laid down on the first slope 322-1 or the second slope 322-2. Since the first slope 322-1 and the second slope 322-2 are tilted, when the coin C is moved by the movement of the carrying belt 302, the part thereof that is in contact with the first slope 322-1 or the second slope 322-2 is slipped down to the lower side, and the surface of the coin C is finally brought into surface contact with the carrying belt 302. In other words, the coin C is promptly brought into surface contact with the carrying belt 302 and is quickly dispensed to the coin receiving opening 116.

Furthermore, as the first lower edge part 318-1 and the second lower edge part 318-2 of the first slope 322-1 and the second slope 322-2 get closer to the coin receiving opening 116, the distance therebetween is widened. Therefore, even when the coins C are juxtaposed between the first lower edge part 318-1 and the second lower edge 318-2, since they are a fan shape in which the downstream side is wide with respect to the moving direction of the carrying belt 302, the coins C can be prevented from being jammed therebetween.

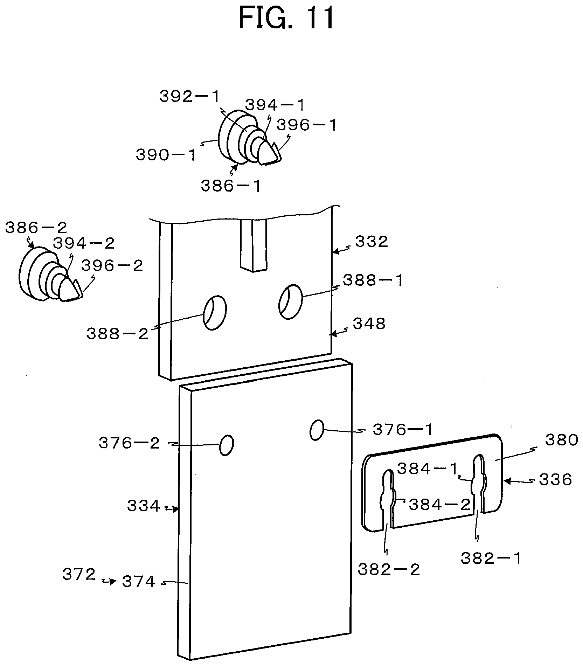

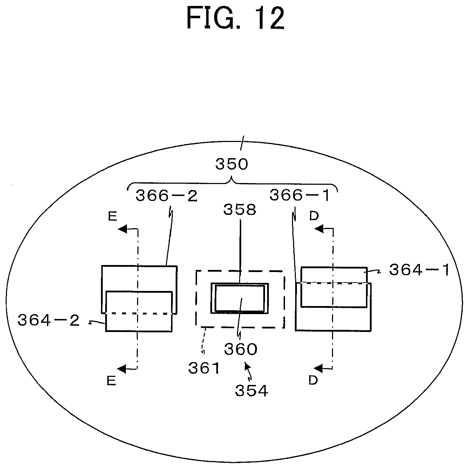

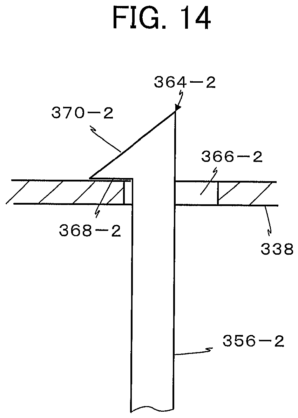

Next, the buffer device 300 will be explained with reference to FIGs. 6 to 15.

The buffer device 300 has a function to promptly eliminate the kinetic energy of the coins C, which are delivered from the coin dispensers 210, drop the coins C onto the carrying belt 302, and guide the coin C so that the coins C are dropped approximately vertically downward. In the present first embodiment, the buffer device 300 is formed by attaching a plurality of buffers 288 to an attachment body 290 at predetermined positions in the dispensing space 274 sandwiched by the first guiding wall 306 and the second guiding wall 308 of the coin carrying and guiding device 118.

The buffers 288 are formed by the attachment body 290, fixed supporting members 332, elastic members 334, and fixed members 336. Two types of the buffers 288, i.e., first buffers 288-1 serving as adjacent elastic partition walls 287-1 and second buffers 288-2 serving as inclined elastic partition walls 287-2 are present. However, most of the structures thereof are common, they will be explained together.

First, the attachment body 290 will be explained.

The attachment body 290 has a function that the plurality of fixed supporting members 332 are fixed thereto and that the attachment body 290 per se is detachably attached to the coin acceptance and payout apparatus 100, and the attachment body 290 has a reversed gutter shape made of a metal plate. Specifically, the attachment body 290 is formed into a reversely recessed shape in cross section by a first side wall 340-1 and a second side wall 340-2, which have both side ends of a flat-plate-shaped top plate 338 bent downward and vertically downwardly extended.

Cylindrical pins 342 and 344 for latching are transversely fixed to front ends and rear ends of the first side wall 340-1 and the second side wall 340-2, respectively (the cylindrical pins in the first-side-wall-340-1 side are not shown since they cannot be seen).

The cylindrical pins 342 and 344 are inserted in and latched by grooves 345-1 and 345-2 (the second-guiding-wall-308 side are not shown) formed at upper ends of the first guiding wall 306 and the second guiding wall 308, which are attached to the frame 101 of the coin acceptance and payout apparatus 100 in a fixed state, and are disposed in a fixed state at the upper end parts of the first guiding wall 306 and the second guiding wall 308.

Next, the fixed supporting member 332 will be explained.

The fixed supporting member 332 has a function that the upper end thereof is fixed to the attachment body 290 and the elastic member 334 is attached to the lower end part thereof. The fixed supporting member 332 is a rectangular plate-shaped body made of resin, a stopper part 346 for attaching the attachment body 290 is formed at the upper end part thereof, and an attachment part 348 of the elastic member 334 is formed in the lower end part thereof. Therefore, the fixed supporting member 332 can be changed to another device having a similar function.

Next, the stopper part 346 will be explained.

The stopper part 346 has a function that the stopper part 346 can be easily attached by insertion into an attachment hole 350 formed in the attachment body 290 and can be easily detached therefrom.

Therefore, the stopper part 346 can be changed to another structure having a similar function. A first slit 352-1 and a second slit 352-2 are formed at a predetermined interval therebetween from the upper end surface of the fixed supporting member 332 in a vertically downward direction. By virtue of them, the positioner 354, which is positioned at the center, and a first latching hook body 356-1 and a second latching hook body 356-2, which are disposed in both sides of the positioner 354, are vertically standing in cantilever plate shapes.

First, the positioner 354 will be explained.

The positioner 354 has a function that the tip thereof determines the fixed supporting member 332 by working together with a positioning hole 358, which is formed in the top plate 338. A positioning projection 360 having a rectangular shape in plane is projecting upward.

The positioning hole 358 is formed into a rectangular shape in plane and is formed so that the positioning projection 360 can be tightly inserted therein.

When the positioning projection 360 is inserted in the positioning hole 358, the positioning hole, in other words, the fixed supporting member 332 cannot be turned about the axis. Therefore, the positioning projection 360 is not limited to that of the present first embodiment as long as it has a similar function and can be formed into a star shape or a triangular shape. In such a case, the positioning hole 358 has to be formed into a corresponding star shape or triangular shape.

In the lower side of the positioning projection 360, an insertion regulating part 361 is formed.

The insertion regulating part 361 has a function to prevent the positioner 354 (the positioning projection 360) from entering the positioning hole 358 by a predetermined distance or more. The insertion regulating part 361 is a flange-like rectangular ring-shaped body formed around the lower end of the positioning projection 360. Therefore, when the positioning projection 360 is inserted in the positioning hole 358 and the insertion regulating part 361 contacts the back side of the top board 338, the positioning projection 360 cannot be inserted more than that. In this state, a first latching edge 368-1 and a second latching edge 368-2, which will be described later, are positioned in the upper surface side of the top board 338; and, as a result, the fixed supporting member 332 is prevented from falling from the attachment body 290 by the cooperation of the first latching hook body 356-1 and the second latching hook body 356-2.

On the center of the lower lateral side of the positioning projection 360 of the positioning body 354, a vertically-long rib-shaped first reinforcing rib 362-1 and a second reinforcing rib 362-2 are formed to a lower part of the fixing supporting member 332, and they are formed so as to prevent the fixing supporting member 332 from being practically deformed in the thickness direction thereof.

Therefore, if the fixing supporting member 332 is not deformed, the first reinforcing rib 362-1 and the second reinforcing rib 362-2 are not required to be formed.

Next, the first latching hook body 356-1 and the second latching hook body 356-2 will be explained.

The first latching hook body 356-1 and the second latching hook body 356-2 have a function to fix the fixed supporting member 332 to the top board 338 by latching with the attachment hole 350 formed in the top board 338, specifically, with a first latching hole 366-1 or a second latching hole 366-2. The first latching hook body 356-1 and the second latching hook body 356-2 have the same shape, but are different only in a point that the directions of the hook bodies are reverse directions. Therefore, the first latching hook 356-1 will be representatively explained.

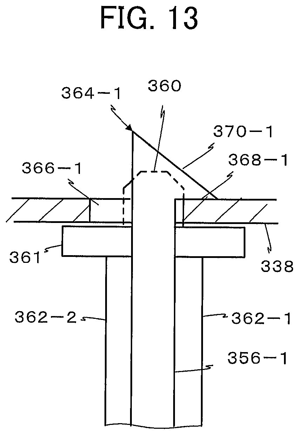

As shown in FIG. 13, the first latching hook body 356-1 is a vertically-long plate-shaped body, has predetermined elastic force, and can be bent in the thickness direction thereof. A first latching hook 364-1 is formed at the tip thereof.

The first latching hook 364-1 includes a first latching edge 368-1 which is formed in parallel to the top board 338 and a first insertion supporting slope 370-1 which forms an angle of about 45 degrees with respect to the first latching edge 368-1 when the first latching hook 364-1 is inserted in the rectangular first latching hole 366-1. The other end part of the first insertion supporting slope 370-1 is connected to the vertical back side of the first latching hook body 356-1. Thus, the upper end part of the first latching hook 364-1 is formed into a right triangular shape and is set in a relation that, when it is to be inserted in the first latching hole 366-1, the first insertion supporting slope 370-1 contacts the top board 338 at the peripheral edge of the first latching hole 366-1, thereby causing the component force for movement toward the center side of the first latching hole to act on the first insertion supporting slope 370-1, the first latching hook body 356-1 is deformed in the thickness direction thereof upon insertion, the tip part of the first latching hook 364-1 passes through the first latching hole 366-1, as a result, the first latching edge 368-1 is positioned in the upper surface side of the top board 338 and is returned by the elastic force caused by the deformation upon the insertion, and the first latching edge 368-1 is returned to the position opposed to the upper surface of the top board 338; thus, the first latching hook 364-1 or a second latching hook 364-2 is latched with the top board 338.

The tip of the first latching hook 364-1 and the second latching hook body 364-2 are formed so as to project to above the tip of the positioning projection 360. This is for causing the positioning projection 360 to be automatically opposed to the positioning hole 358 by inserting the tip part of the first latching hook 364-1 and the second latching hook 364-2 into the first lathing hole 366-1 and the second latching hole 366-2 and guiding it.

The first insertion supporting slope 370-1 and a second insertion supporting slope 370-2 are determined so as to be in contact with the top board 338 immediately after the tip of the positioning projection 360 is moved to the positioning hole 358. This is for preventing the fixed supporting member 332 from being rotated by the reactive force that acts on the first insertion supporting slope 370-1 and the second insertion supporting slope 370-2.

This structure has an advantage that the labor of attaching the fixed supporting member 332 to the attachment body 290 can be reduced.

When the fixed supporting member 332 is to be attached to the attachment body 290, first, the tip of the first latching hook 364-1 is inserted in the first latching hole 366-1, the tip of the second latching hook 364-2 is inserted in the second latching hole 366-2, they are then slightly pushed in, and the positioning projection 360 is inserted in the positioning hole 358.

After the tip of the positioning projection 360 is moved to the positioning hole 358, the first insertion supporting slope 370-1 contacts the top board 338 at the peripheral edge of the first latching hole 366-1. Therefore, the vector that moves the first latching hook body 356-1 to the center side of the first latching hole 366-1 is generated at the first insertion supporting slope 370-1. The first latching hook body 356-1 is deformed upon insertion by the vector, the first latching edge 368-1 passes through the latching hole 366-1 and is positioned in the upper surface side of the top board 338, and, then, the first latching edge 368-1 is moved to the position opposed to the upper surface of the top board 338 by the returning movement of the deformation caused upon insertion of the first latching hook body 356-1. As a result, the first latching hook 364-1 is latched with the first latching hole 366-1, therefore, with the attachment body 290.

The second latching hook body 356-2 is also deformed almost at the same time. When the second latching edge 368-2 is moved to the position opposed to the upper surface of the top board 338, the second latching hook 364-2 is latched with the second latching hole 366-2, therefore, with the attachment body 290.

As a result, the fixed supporting member 332 is fixed in a state that the fixed supporting member 332 cannot be turned with respect to the attachment body 290 and cannot fall from the attachment body 290.

When the fixed supporting member 332 is to be detached from the attachment body 290, the fixed supporting member 332 can be detached by pulling after the first insertion supporting slope 370-1 and the second insertion supporting slope 370-2 are pushed to the center side of the first latching hole 366-1 and the second latching hole 366-2, respectively, to move the first latching edge 368-1 and the second latching edge 368-2 into the first latching hole 366-1 or the second latching hole 366-2 from above the top board 338.

Next, the elastic member 334 will be explained.

The elastic member 334 has a function to be fixed to the lower end part of the fixed supporting member 332, collide with the coins C ejected from the dispensing opening 250 of the coin dispenser 210, promptly eliminate the kinetic energy in the ejecting direction, and guide the dropped coins C. The elastic member 334 consists of a resin sheet 372 having elasticity and a predetermined thickness such as a urethane resin. Therefore, the elastic member 334 can be changed to a material that has a similar function. Two types of the resin sheets 372 are employed. However, they are not different in basic parts, but only the shapes thereof are different.

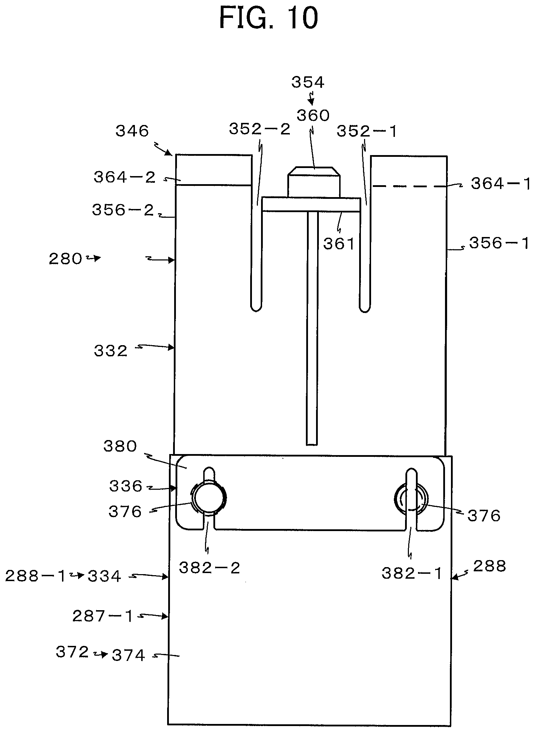

More specifically, a first resin sheet 374 shown in FIG. 10 is formed into a rectangular shape as a whole including the attachment part thereof, and a first circular hole 376-1 and a second circular hole 376-2 which are circular for attachment are formed in the upper end part thereof.

A second resin sheet 378 is formed into a projecting shape as a whole. The second resin sheet 378 is formed into the projecting shape by widening the part below an intermediate part of the first resin sheet 374. It is widened in order to increase the guide range of the coins C. The structure provided with the first resin sheet 374 is the first buffer 288-1, and the structure provided with the second resin sheet is the second buffer 288-2.

Next, the fixing member 336 will be explained.

The fixing member 336 has a function to fix the elastic member 334 to the fixed supporting member 332. The fixing member 336 is a rectangular plate-shaped body 380. Therefore, the fixing member 336 can be changed to another member having a similar function.

In the rectangular plate-shaped body 380, a first long groove 382-1 and a second long groove 382-2 having the same vertically-long slit shapes are formed at a predetermined interval therebetween, and a first wide part 384-1 and a second wide part 384-2 for fitting a first attachment pin 386-1 and a second attachment pin 386-2, which are transversely projecting from the lower end part of the fixed supporting member 332, are formed at intermediate part of the first long groove 382-1 and the second long groove 382-2.

The first attachment pin 386-1 and the second attachment pin 386-2 are formed to be separated from the fixed supporting member 332 and are integrated by penetration through a first mounting hole 388-1 and a second mounting hole 388-2, which are formed in the lower end part of the fixed supporting member 332.

Since the first attachment pin 386-1 and the second attachment pin 386-2 have the same shapes, the first attachment pin 386-1 will be representatively explained.

The first attachment pin 386-1 is formed by a disk-shaped first stopper part 390-1, a columnar first intermediate-diameter part 392-1 adjacent to the first stopper part 390-1 and having a smaller diameter than that of the first stopper part 390-1, a columnar first small-diameter part 394-1 adjacent to the first intermediate-diameter part 392-1 and having a smaller diameter than that of the first intermediate-diameter part 392-1, and a triangular-pyramidal first tip part 396-1 which has a base part apparently having a larger diameter than that of the first small-diameter part 394-1 and has a dividing groove at the center part thereof.

The first intermediate-diameter part 392-1 of the first attachment pin 386-1 is tightly inserted in the first mounting hole 388-1, and the first stopper part 390-1 prevents the first attachment pin 386-1 from being further moved. Therefore, the first small-diameter part 394-1 and the first tip part 396-1 project to the front surface side of the fixed supporting member 332.

When the elastic member 334 is to be attached to the fixed supporting member 332, first, the first attachment pin 386-1 and the second attachment pin 386-2 are respectively inserted in the first circular hole 376-1 and the second circular hole 376-2 formed in the elastic member 334 to mate the circular holes with the first small-diameter part 394-1 and the second small-diameter part 394-2. In this mating, the elastic member 334 has elasticity, and the diameters of the first tip part 396-1 and a second tip part 396-2 are reduced since they have the dividing grooves; therefore, the first tip part 396-1 and the second tip part 396-2 apparently having the part of larger diameters than those of the first small-diameter part 394-1 and the second small-diameter part 394-2 can penetrate through the first circular hole 376-1 and the second circular hole 376-2.

Then, the lower-end-part openings of the first long groove 382-1 and the second long groove 382-2 of the plate-shaped body 380 are placed at the first small-diameter part 394-1 and the second small-diameter part 394-2 of the first attachment pin 386-1 and the second attachment pin 386-2 and pushed down. As a result, the first attachment pin 386-1 and the second attachment pin 386-2 are stopped and fixed when they are relatively moved to the first wide part 384-1 and the second wide part 384-2.

Then, the arrangement of the first buffers 288-1 and the second buffers 288-2 in the dispensing space 274 will be explained with reference to FIG. 5.

The first buffers 288-1 are used for partitioning of the boundary of the coin dispenser 210-2C adjacent to the first coin dispenser pair 292-1, the boundary between the first coin dispenser pair 292-1 and the second coin dispenser pair 292-2, the boundary between the second coin dispenser pair 292-2 and the third coin dispenser pair 292-3, and the side of the third coin dispenser pair 292-3 opposite to the second coin dispenser pair 292-2. The first elastic members 334-1 are disposed so as to form a right angle with respect to the extending direction line L of the carrying belt 302 between the first coin dispenser pair 292-1 to the third coin dispenser pair 292-3.

Specifically, the first buffers 288-1 are disposed in the coin-receiving-opening-116 side of the first coin dispenser pair 292-1, between the first coin dispenser pair 292-1 and the second coin dispenser pair 292-2, between the second coin dispenser pair 292-2 and the third coin dispenser pair 292-3, and in the side of the third coin dispenser pair 292-3 opposite to the coin receiving opening 116. The first buffers 288-1 are disposed so as to form a right angle with respect to the first guiding wall 306 and the second guiding wall 308 in a planar view.

Furthermore, the first buffer 288-1 is disposed also in the side of the 2-cent coin dispenser 210-2C opposite to the coin receiving opening 116. This is for guiding the coins C, which are delivered from the 2-cent coin dispenser 210-2C, so that the coins are smoothly dropped onto the carrying belt 302.

When the first buffer 288-1 is disposed between the first guiding wall 306 and the second guiding wall 308, the lower end part of the elastic member 334 is positioned right beside the coin delivery position 296 at a horizontal-line position, and the gaps between the elastic member 334 and the first guiding wall 306 and the second guiding wall 308 are set to be smaller than the diameter of the minimum diameter coin. This is for preventing the delivered coins C from contacting the adjacent denominations.

As shown in FIG. 6, the coin delivery position 296 is an upper end part of the base 220 opposed to the dispensing opening 250, and the straight line LC connecting the left/right coin delivery positions 296 constituting the first coin dispenser pair 292-1 is in a positional relation that the line is overlapped with a lower end part of the elastic member 334 when viewed in a horizontal direction.

The gap between the lower end of the elastic member 334 and the later-described carrying belt 302 is set to be slightly smaller than the diameter of the coins C, which are delivered in the upstream side in the moving direction of the upper surface 402 of the carrying belt 302. This is for promptly laying down the coins C, which are delivered in the upstream side and standing, bringing the coins into surface contact with the carrying belt 302, and quickly feeding the coins to the coin receiving opening 116. The gaps between the lower ends of the elastic members 334 and the later-described carrying belt 302 may be uniformly set to be slightly smaller than the diameter of the coins C, which easily stand. This is for a reason that thick coins tend to stand on the carrying belt. For example, the gap is set to 20 millimeters slightly smaller than the diameter of a thick coin, in the present example, the diameter 22.25 millimeters of the minimum-diameter 20-cent coin among the coins having the thickness of 2 millimeters.

However, the gap between the lower end of the elastic member 334 and the upper surface 402 of the carrying belt 302 can be set to be larger than the diameter of the coins C, which are dispensed in the upstream side. This is for a reason that, when the carrying belt 302 is disposed to be tilted so that the front side thereof is lowered as described later, the coins C are automatically rolled to the coin receiving opening 116 side, therefore, the necessity of promptly bringing the coins into surface contact with the carrying belt 302 is reduced. Therefore, if various allocations of denominations to the coin dispensers 210 are expected, the gap between the lower end of the elastic member 334 and the upper surface 402 of the carrying belt 302 can be set to be slightly larger than the maximum diameter of a target coin.

Next, the second buffers 288-2 will be explained.

The second buffers 288-2 are disposed to be oblique to the extending direction line L of the carrying belt 302 preferably to form 45 degrees between the first buffers 288-1. Furthermore, the first elastic member 334-1 of the first buffer 288-1 is parallel to the center line CL of the dispensing openings 250 from the coin dispensers 210, and the second elastic member 334-2 of the second buffer 288-2 is disposed so as to form 45 degrees with respect to the center line CL.

When the second buffer 288-2 is disposed in the dispensing space 274, the center part of the second elastic member 334-2 is positioned right beside at a horizontal-line position of the coin delivery position 296, and the gaps between the second elastic member 334-2 and the first guiding wall 306 and the second guiding wall 308 are set to be smaller than the diameter of the minimum diameter coin. The gap between the lower end of the second elastic member 334-2 and the carrying belt 302 is set to 20 millimeters as well as the first elastic member 334-1.

The center line CL of the dispensing opening 250 is shown for the sake of explanation and is a straight line which is from an intermediate point MP of the fixed roller 260 and the movable roller 264 and is parallel to lateral edges of the base 220 as shown in FIG. 4.

From the first coin dispenser pair 292-1 to the third coin dispenser pair 292-3, the center lines CL of the dispensing openings 250 of the opposed coin dispensers are deviated from each other so that the center lines CL are positioned in the upstream side and the downstream side with respect to the extending direction line L, and the center lines CL are disposed so as to form 45 degrees with respect to the elastic member 334 of the second buffer 288-2. Therefore, the center lines CL are directed to the positions deviated from the center part of the elastic member 334 of the second buffer 288-2.

In other words, in the front side of the dispensing opening 250 (coin delivery opening 311), tapered convergence space 400 is formed by the first buffer 288-1, the second buffer 288-2, the first elastic member 334-1, and the second elastic member 334-2 in a planar view. In further other words, the convergence space 400 has a triangular prism shape approximately vertical to the carrying belt 302 immediately above the carrying belt 302. The convergence space 400 corresponding to the denominations are shown by the same reference sign 400 with the denominations.

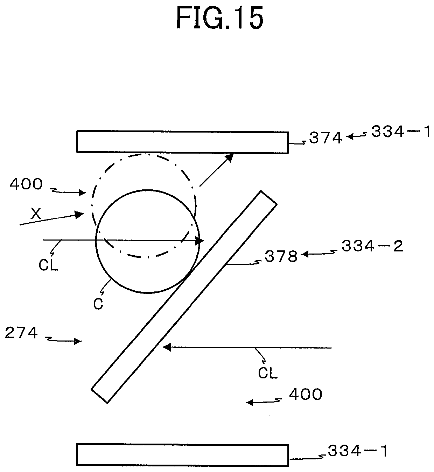

Next, working of the first buffers 288-1 and the second buffers 288-2, in other words, the first elastic members 334-1 and the second elastic members 334-2 will be explained also with reference to FIG. 15.

Regarding the first buffer 288-1 and the second buffer 288-2, if the coin C, which is ejected obliquely upward by the ejector 224 and is moved to the convergence space 400 through the dispensing opening 250 of the coin dispenser 210 and the coin delivery opening 311, is moved along the center line CL, the coin C collides with the second elastic member 334-2; and, if the coin C is moved in the direction of the ejecting direction line X, first, the coin C collides with the first elastic member 334-1.

The first elastic member 334-1 or the second elastic member 334-2 is deformed because of the elasticity thereof when the coin collides with the first elastic member 334-1 of the first buffer 288-1 or the second elastic member 334-2 of the second buffer 288-2. Therefore, the kinetic energy directed toward the ejecting direction of the coin C is eliminated by the deformation, and the coin C is dropped right below.

If the kinetic energy in the ejecting direction is not eliminated by the first collision, the rebounded coin C collides with the opposed first elastic member 334-1 or second elastic member 334-2, the kinetic energy in the ejecting direction is further eliminated, and the coin C is dropped right below.

If the rebounded coin C collides with the first elastic member 334-1 or the second elastic member 334-2, since the convergence space 400 has a tapered shape, the coin C immediately collides with the first elastic member 334-1 or the second elastic member 334-2 in a shorter period of time than that of the first time, the kinetic energy thereof is eliminated, and the coin C is dropped onto the carrying belt 302 in an extremely short period of time as a result; therefore, there is an advantage that it contributes to quick dispensing of the coin C. Moreover, since the coin C ejected by the ejector 224 collides with the first elastic member 334-1 or the second elastic member 334-2 consisting of an elastic material, there is an advantage that collision sound is low and noise generation is small compared with the case of collision with metal.

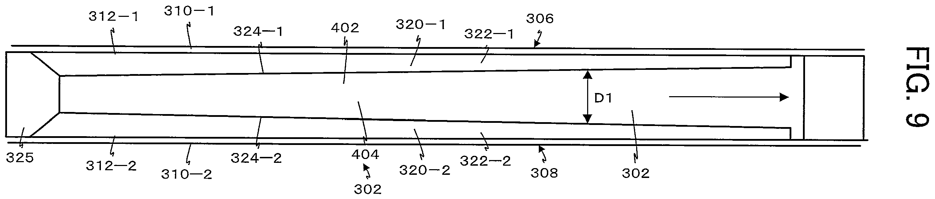

Next, the carrying belt 302 will be explained mainly with reference to FIG. 8 and FIG. 9.

The carrying belt 302 has a function to carry the coin C, which is dropped onto the upper surface 402 thereof, to the coin receiving opening 116. In the present first embodiment, the carrying belt 302 is a flat belt 404 and is stretched between a pair of rollers 406 and 408, and the upper surface 402 thereof is disposed so that the front side thereof is lowered at a predetermined angle toward the coin-receiving-opening-116 side. In a state in which the flat belt 404 is still, the slope angle thereof is preferred to be an angle at which the standing coin C is rolled to the coin-receiving-opening-116 side. This is for quickly carrying the coin C to the coin receiving opening 116 by movement of the carrying belt 302 and rolling of the coin C. As a method of judging the rolling, the condition of this slope angle is satisfied if the coin C starts rolling to the coin-receiving-opening-116 side when, after the coin C is pinched by fingertips and stopped still in a vertically standing state on the carrying belt 302 when visually checked, which is in a still state, the pinching is released.

One of the rollers, the roller 406 in the present first embodiment, is selectively driven so that the upper surface 402 is moved toward the coin receiving opening 116 by a third electric motor 410.

The coin C carried by the flat belt 404 is fed into the coin receiving opening 116 having a bowl shape.

At the same time as when a coin dispensing instruction is output to the coin dispenser 210, the third electric motor 410 starts rotating and, after the time sufficient for carrying elapses, stops rotating.

The coins C delivered from the coin dispensers 210 are dropped in the convergence space 400 as described above and are dropped onto the upper surface 402 of the carrying belt 302 right therebelow. The coins C dropped onto the carrying belt 302 are brought into surface contact with the carrying belt 302 in the above described manner, carried toward the coin receiving opening 116 by movement of the carrying belt 302, and are dropped from the end part thereof to and stored in the coin receiving opening 116.

Next, working of the present first embodiment will be explained.

First, working of depositing will be explained.

When coins of a plurality of denominations are loaded to the inlet 120, the loaded coins are dropped onto the depositing flat belt 122.

As a result, the light axis of the photoelectric sensor 128 is interrupted by the coins C. Therefore, a coin detection signal is output, and the first electric motor 126 is rotated based on the coin detection signal.

Therefore, since the upper surface of the depositing flat belt 122 is moved to the coin-separating-and-feeding-device-104 side, the coins C are dropped from the end part of the depositing flat belt 122 and dropped into the coin storing container 132 of the coin separating and feeding device 104.

When the coins C are mutually overlapped and carried, since the collapsing roller 124 is rotated backward, the lower surface of the roller 124 is moved in the opposite direction of that of the depositing flat belt 122, and the stacked coins C are prevented from moving and are dropped by the collapsing roller 124.

The dropped coins C are carried again toward the coin separating and feeding device 104 again by movement of the depositing flat belt 122 as well as the above description.

When the photoelectric sensor 128 does not detect the coins C, the first electric motor 126 is stopped, and drive of the depositing flat belt 122 is stopped.

Furthermore, an unshown motor is rotated by the coin detection signal of the photoelectric sensor 128, and the rotating disk 140 is rotated in the counterclockwise direction of FIG. 1.

The impeller 152 works together with the rotating disk 140 at a transmission ratio of 1 : 1 and is rotated in the clockwise direction of FIG. 1.

Furthermore, the first sprocket 166 is rotated in the counterclockwise direction of FIG. 1, and the chain 170 is circulated in the counterclockwise direction.

Therefore, the coins C dropped into the coin storing container 132 are stirred by the plate 146 and the pusher 148 to variously change the positions thereof. In the process of the change of the positions, only one coin C is received by the receiving unit 138.

More specifically, the coin C is positioned in the receiving unit 138 in the state in which one side of the coin C is in surface contact with the rotating disk 140, and the coin is pushed by a partial lateral surface of the plate 146 and rotated together with the rotation of the rotating disk 140.

Immediately after the receiving unit 138 passes an uppermost position, the pusher 148 carries out pivotal motion in the counterclockwise direction and is moved to the circumferential direction of the rotating disk 140.

As a result, the coin C positioned in the receiving unit 138 is pushed to the circumferential direction of the rotating disk 140 by the pusher 148, and, immediately after guided by the coin receiver 134, the coin C is pushed by the pusher 156 of the impeller 152 rotated together with the rotating disk 140.

If the coins C dropped into the coin storing container 132 are equal to or more than a predetermined amount, a full signal is output from the full sensor 136, the first electric motor 126 is stopped even when the loaded coins are detected by the photoelectric sensor 128, and excessive loading of the coins C to the coin separating and feeding device 104 is prevented.

In a case in which the coins C in the coin storing container 132 are fed by the rotation of the rotating plate 130, the full signal is not output from the full sensor 136, and the photoelectric sensor 128 outputs a coin signal, the first electric motor 126 is started again, and the coins C on the depositing flat belt 122 are fed to the coin separating and feeding device 104.

The coin C pushed by the pusher 156 is moved in a moving passage while one side thereof is in contact with the slide base.

The coin C is moved while the peripheral surface of the coin is pushed against the detection guide 154 by the centrifugal force of the coin per se.

In this moving process, first, the coin C is opposed to the magnetic sensor 150, and information about the diameter, thickness, and material thereof is obtained.

The authenticity and denomination of each coin is distinguished by comparing these outputs with reference values.

After the coin C is opposed to the magnetic sensor 150, the coin C is pushed to the moving passage of the pushing pins 172 of the carrying device 108 by the pusher 156.

Immediately after the coin C is pushed to the moving passage, the coin C is pushed by the pushing pin 172 moved by the chain 170.

As a result, the coin C is moved in the moving passage while the peripheral surface thereof is guided by the guide rail 164 and one side thereof is in surface contact with the slide plate 162.

During carrying of the coin C in the moving passage, the gate device corresponding to the coin sorting hole is actuated based on, for example, the stored denomination and based on a timing signal from an unshown timing sensor, and the coin C of the predetermined denomination is dropped into the predetermined coin sorting hole.

Specifically, in a case of a false coin, the gate of the rejected-coin sorting hole 194 is opened for a predetermined period of time, and the false coin moved along the guide rail 164 is dropped into the rejected-coin sorting hole 194, guided to an unshown chute, dropped onto the carrying belt 302, and returned to the coin receiving opening 116 by the carrying belt 302, which is activated by the coin signal of the photoelectric sensor 128 and carrying out carrying motion.

If the discriminated denomination is the 2-cent coin 2C, the gate of the 2-cent-coin sorting hole 184 is opened for a predetermined period of time based on the timing signal, and the 2-cent coin 2C moved while being guided by the guide rail 164 is dropped into the 2-cent-coin sorting hole 184, is then guided by an unshown chute, and is stored in the 2-cent coin dispenser 210-2C.

If the discriminated denomination is the 5-cent coin 5C, the gate of the 5-cent-coin sorting hole 186 is opened for a predetermined period of time based on a position signal output from the timing sensor, and the 5-cent coin 5C moved while being guided by the guide rail 164 is dropped into the 5-cent-coin sorting hole 186, is then guided by an unshown chute, and is stored in the 5-cent coin dispenser 210-5C.

If the discriminated denomination is the 1-cent coin 1C, the gate of the 1-cent-coin sorting hole 196 is opened for a predetermined period of time based on a position signal output from the timing sensor. Therefore, the 1-cent coin 1C moved while being guided by the guide rail 164 is dropped into the 1-cent-coin sorting hole 196, is then guided by an unshown chute, and is stored in the 1-cent coin dispenser 210-1C.

If the discriminated denomination is the 10-cent coin 10C, the gate of the 10-cent-coin sorting hole 188 is opened for a predetermined period of time based on a position signal output from the timing sensor, and the 10-cent coin 10C moved while being guided by the guide rail 164 is dropped into the 10-cent-coin sorting hole 188, is then guided by an unshown chute, and is stored in the 10-cent coin dispenser 210-10C.

If the discriminated denomination is the 2-euro coin 2E, the gate of the 2-euro-coin sorting hole 198 is opened for a predetermined period of time based on a position signal output from a third timing sensor. Therefore, the 2-euro coin 2E moved while being guided by the guide rail 164 is dropped into the 2-euro-coin sorting hole 198, is then guided by an unshown chute, and is stored in the 2-euro coin dispenser 210-2E.

If the discriminated denomination is the 20-cent coin 20C, the gate of the 20-cent sorting hole 190 is opened for a predetermined period of time based on a position signal output from the timing sensor, and the 20-cent coin 20C moved while being guided by the guide rail 164 is dropped into the 20-cent sorting hole 190, is then guided by an unshown chute, and is stored in the 20-cent coin dispenser 210-20C.

If the discriminated denomination is the 50-cent coin 50C, the gate of the 50-cent sorting hole 200 is opened for a predetermined period of time based on a position signal output from the timing sensor, and the 50-cent coin 50C moved while being guided by the guide rail 164 is dropped into the 50-cent sorting hole 200, is then guided by an unshown chute, and is stored in the 50-cent coin dispenser 210-50C.

If the discriminated denomination is the 1-euro coin, the gate of the 1-euro sorting hole 202 is opened for a predetermined period of time based on a position signal output from the timing sensor, and the 1-euro coin 1E moved while being guided by the guide rail 164 is dropped into the 1-euro sorting hole 202, is then guided by an unshown chute, and is stored in the 1-euro coin dispenser 210-1E.

If the coin storing amount of any of the coin dispensers 210 is over a predetermined value, in other words, in an overflowed state, the gate of the corresponding coin sorting hole is not opened.

In other words, since coins are not dropped into any of the coin sorting holes, the coins are dropped into the overflowed-coin sorting hole 192 and are stored in an overflowed-coin storing device OF.

Next, working upon payment will be explained.

In the present first embodiment, an example of a case in which the coins C are dispensed from all the coin dispensers 210, respectively, and all of them are dispensed at the same time for the is output from a higher-level apparatus such as a POS register.

The rotating disk 218 of each of the coin dispensers 210 is rotated by this dispensing instruction. Furthermore, the third electric motor 410 is driven, and the upper surface 402 of the carrying belt 302 is moved toward the coin receiving opening 116.

After the coin C is pushed into the part between the fixed roller 260 and the movable roller 264 by the rotation of the rotating disk 218, the coin C is ejected basically in the direction of the ejecting direction line X by the spring force of the biasing device 266 and, first, collides with the first elastic member 334-1.

However, the ejecting direction of the coin C is changed by various conditions. In some cases, the coin C is ejected in the extending direction of the center line CL and, first, collides with the second elastic member 334-2.

If the ejected coin C collides with the second elastic member 334-2 or the first elastic member 334-1, the second elastic member 334-2 and the first elastic member 334-1 are elastically deformed and reduce the kinetic energy in the ejecting direction of the coin C. The coin C of which kinetic energy in the ejecting direction is approximately eliminated in the first collision is dropped approximately right below. If the kinetic energy in the ejecting direction cannot be significantly eliminated by the first collision, the collided coin C is rebounded like an obtuse angle, collides with the paired second elastic member 334-2 or first elastic member 334-1, eliminates the kinetic energy, and is dropped right below in the convergence space 400 separated for each coin.

When the coin C is dropped and jumped up from the carrying belt 302, the coin C sometimes exhibits a standing state. Even in the state in which the coin C is standing, the coin C leans on the first slope 322-1 or the second slope 322-2; therefore, the coin C cannot maintain the standing state and is laid down so that the lower end thereof is on the carrying belt 302 and the upper end thereof is supported on the first slope 322-1 or the second slope 322-2. Then, the coin is dragged by the movement of the upper surface 402 of the carrying belt 302, the whole lower surface of the coin C is brought into surface contact with the carrying belt 302, and the coin C is quickly fed to the coin receiving opening 116.

Even when the coins C are delivered at the same time from the coin dispensers constituting the first coin dispenser pair 292-1, the second coin dispenser pair 292-2, and the third coin dispenser pair 292-3 or from an adjacent coin dispenser, each of the coins C collides and dropped in the independent convergence space 400. Therefore, the coins do not affect the behavior of each other.

If the distance between the lower end of the second elastic member 334-2 or the first elastic member 334-1 and the upper surface 402 of the carrying belt 302 is smaller than the diameter of the coin dispensed in the upstream side thereof, in other words, if the coin C is standing on the carrying belt 302, the upper part of the coin C contacts the second elastic member 334-2 or the first elastic member 334-1 in the immediately downstream of dispensing of the coin C, and the coin C is actively toppled since the movement thereof is interrupted. Therefore, the combination of these brings the coin C into surface contact with the carrying belt 302 in a short period of time; therefore, the coin is quickly carried to the coin receiving opening 116.

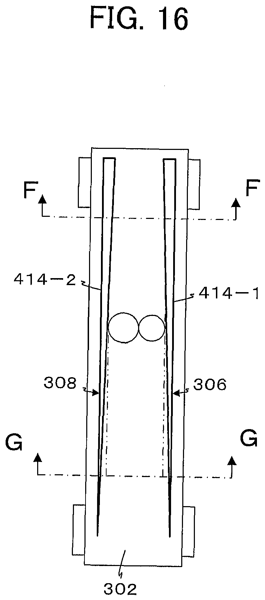

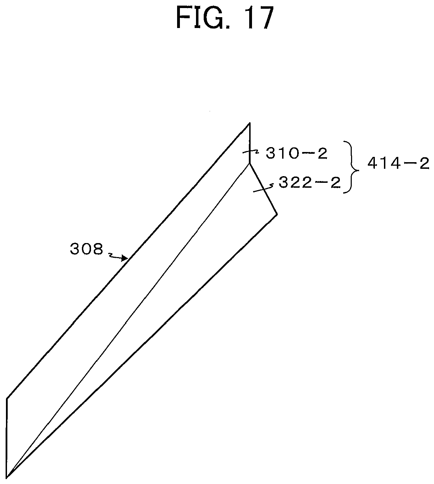

Each of the coin dispensers 210 detects dispensing of the coin C by the coin detector 226 and outputs a detection signal. Therefore, excessive dispensing of the coins C is prevented by stopping power feed to the second electric motor 222 and rapidly stopping the rotation of the rotating disk 218. Next an example will be explained with reference to FIG. 16 to FIG. 19.

The second embodiment is an example in which the first guiding wall 306 and the second guiding wall 308 are formed by a single first guiding plate 414-1 and a second guiding plate 414-2, respectively.

In other words, the first guiding plate 414-1 includes a first vertical guiding wall 310-1 and a first slope 322-1, and the second guiding plate 414-2 includes a second vertical guiding wall 310-2 and a second slope 322-2.

Working of the second embodiment is similar to that of the first embodiment. However, in the present second embodiment, the first guiding wall 306 and the second guiding wall 308 are formed by single plates, respectively; therefore, there is an advantage that the apparatus can be formed at low cost.

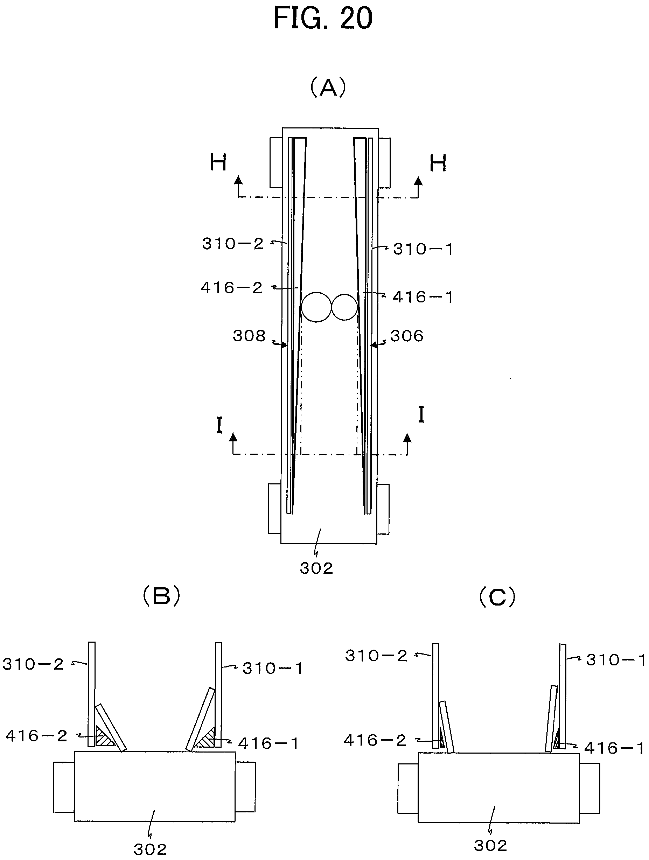

Next, a further example will be explained with reference to FIG. 20. In this example the first guiding wall 306 and the second guiding wall 308 are respectively formed by a first vertical guiding wall 310-1 and a second vertical guiding wall 310-2, which are vertically standing with respect to the carrying belt 302, and a third toppler 416-1 and a fourth toppler 416-2, which are formed of an unprocessed wood material and have right triangular cross sections.

Compared with the first embodiment, the structure that the first toppler 416-1 and the second toppler 416-2 are formed of the unprocessed wood material is different. However, working effects are similar to those of the first embodiment.

### [Reference Signs List]

- 1C: 1-CENT COIN
- 1E: 1-EURO COIN
- 2C: 2-CENT COIN
- 2E: 2-EURO COIN
- 5C: 5-CENT COIN
- 10C: 10-CENT COIN
- 20C: 20-CENT COIN
- 50C: 50-CENT COIN
- 10, 12: ROLLER
- 14: CARRYING BELT
- 16: FIRST GUIDING WALL
- 18: SECOND GUIDING WALL
- 20: COIN RECEIVING OPENING
- 101: FRAME
- 102: CARRYING DEVICE
- 104: COIN SEPARATING AND FEEDING DEVICE
- 106: DENOMINATION DISCRIMINATING DEVICE
- 108: CARRYING DEVICE
- 110: SORTING UNIT
- 112: STORING UNIT
- 114: PAYMENT DEVICE
- 116: COIN RECEIVING OPENING
- 118: COIN CARRYING AND GUIDING DEVICE
- 120: INLET
- 122: DEPOSITING FLAT BELT
- 124: ROLLER
- 126: FIRST ELECTRIC MOTOR
- 128: PHOTOELECTRIC SENSOR
- 130: ROTATING DISK
- 132: COIN STORING CONTAINER
- 134: COIN RECEIVER
- 136: FULL SENSOR
- 138: RECEIVING UNIT
- 140: ROTATING DISK
- 142: CONCAVE PART
- 146: PLATE
- 148: PUSHER
- 150: MAGNETIC SENSOR
- 152: IMPELLER
- 154: DETECTION GUIDE
- 156: PUSHER
- 158: COIN HOLDING PART
- 160: ENDLESS CARRIER
- 162: SLIDE PLATE
- 164: GUIDE RAIL
- 166: FIRST SPROCKET
- 168: SECOND SPROCKET
- 170: CHAIN
- 172: PUSHING PIN
- 174: CARRYING PATH
- 180: UPPER SORTING UNIT
- 182: LOWER STORING UNIT
- 184, 186, 188, 190, 194, 196, 198, 200: COIN SORTING HOLES
- 200: BASE
- 210: COIN DISPENSER
- 212: FIRST COIN DISPENSER ROW
- 214: SECOND COIN DISPENSER ROW
- 216: COIN STORING CONTAINER
- 218: ROTATING DISK
- 220: BASE
- 222: SECOND ELECTRIC MOTOR
- 224: EJECTOR
- 226: COIN DETECTOR
- 230: CIRCULAR HOLE
- 232: BASE FRAME
- 234: CIRCULAR HOLE
- 236: THROUGH HOLE
- 238: STIRRER
- 240: FIRST PUSHER
- 242: SECOND PUSHER
- 244: UPPER SURFACE
- 246, 248: PINS
- 250: DISPENSING OPENING
- 252, 254: SLOPES
- 256: ROTATING SHAFT
- 258: FIXED GUIDE
- 260: FIXED ROLLER
- 262: MOVABLE GUIDE
- 264: MOVABEL ROLLER
- 266: BIASING DEVICE
- 268: LEVER
- 269: FIXED SHAFT
- 270: SPRING
- 272: STOPPER
- 274: DISPENSING SPACE
- 276: REBOUNDER
- 278: ELECTROMAGNETIC COIN DETECTING DEVICE
- 280: BRACKET
- 282: DETECTION PASSAGE
- 284: SENSOR
- 287-1: ADJACENT ELASTIC PARTITION WALL
- 287-2: INCLINED ELASTIC PARTITION WALL
- 288: BUFFER
- 288-1: FIRST BUFFER
- 288-2: SECOND BUFFER
- 290: ATTACHMENT BODY
- 292-1: FIRST COIN DISPENSER PAIR
- 292-2: SECOND COIN DISPENSER PAIR
- 292-3: THIRD COIN DISPENSER PAIR
- 292-4: FOURTH OPPOSED DEVICE
- 296: COIN DELIVERY POSITION
- 300: BUFFER DEVICE
- 302: CARRYING BELT
- 304: GUIDING WALL
- 306: FIRST GUIDING WALL
- 308: SECOND GUIDING WALL
- 310-1: FIRST VERTICAL GUIDING WALL
- 310-2: SECOND VERTICAL GUIDING WALL
- 311: COIN DELIVERY OPENING
- 312-1: FIRST TOPPLER
- 312-2: SECOND TOPPLER
- 314-1: FIRST SLOPE
- 316-1: FIRST RELIEF PART
- 318-1: FIRST LOWER EDGE PART
- 318-2: SECOND LOWER EDGE PART
- 320-1: FIRST SLOPE
- 322-1: FIRST SLOPE
- 322-2: SECOND SLOPE
- 324-1: FIRST LOWER EDGE
- 324-2: SECOND LOWER EDGE
- 325: BACK-PART GUIDING PLATE
- 326: UPPER PART
- 328: LOWER PART
- 332: FIXED SUPPORTING MEMBER
- 334: ELASTIC MEMBER
- 334-1: FIRST ELASTIC MEMBER
- 334-2: SECOND ELASTIC MEMBER
- 336: FIXED MEMBER
- 338: TOP BOARD
- 340-1: FIRST SIDE WALL
- 345-1, 345-2: GROOVES
- 340-2: SECOND SIDE WALL
- 342, 344: CYLINDRICAL PINS
- 346: STOPPER PART
- 348: ATTACHMENT PART
- 350: ATTACHMENT HOLE
- 352-1: FIRST SLIT
- 352-2: SECOND SLIT
- 354: POSITIONER
- 356-1: FIRST LATCHING HOOK BODY
- 356-2: SECOND LATCHING HOOK
- 358: POSITIONING HOLE
- 360: POSITIONING PROJECTION
- 361: INSERTION REGULATING PART
- 362-1: FIRST REINFORCING RIB
- 362-2: SECOND REINFORCING RIB
- 364-1: FIRST LATCHING HOOK
- 364-2: SECOND LATCHING HOOK
- 366-1: FIRST LATCHING HOLE
- 366-2: SECOND LATCHING HOLE
- 368-1: FIRST LATCHING EDGE
- 368-2: SECOND LATCHING EDGE
- 370-1: FIRST INSERTION SUPPORTING SLOPE
- 370-2: SECOND INSERTION SUPPORTING SLOPE
- 372: RESIN SHEET
- 374: FIRST RESIN SHEET
- 376-1: FIRST CIRCULAR HOLE
- 376-2: SECOND CIRCULAR HOLE
- 378: SECOND RESIN SHEET
- 380: RECTANGULAR PLATE
- 380: PLATE
- 382-1: FIRST LONG GROOVE
- 382-2: SECOND LONG GROOVE
- 384-1: FIRST WIDE PART
- 388-1: FIRST ATTACHMENT HOLE
- 384-2: SECOND WIDE PART
- 388-2: SECOND ATTACHMENT HOLE
- 386-1: FIRST ATTACHMENT PIN
- 386-2: SECOND ATTACHMENT PIN
- 390-1: FIRST STOPPER PART
- 392-1: FIRST INTERMEDIATE-DIAMETER PART
- 394-1: FIRST SMALL-DIAMETER PART
- 394-2: SECOND SMALL-DIAMETER PART
- 396-1: FIRST TIP PART
- 396-2: SECOND TIP PART
- 400: CONVERGENCE SPACE
- 402: UPPER SURFACE
- 404: FLAT BELT
- 406, 408: ROLLERS
- 410: THIRD ELECTRIC MOTOR
- 414-1: FIRST GUIDING PLATE
- 414-2: SECOND GUIDING PLATE
- 416-1: FIRST TOPPLER
- 416-2: SECOND TOPPLER

## Claims

1. Coin payment apparatus configured to juxtapose a first coin dispenser row (212) and a second coin dispenser row (214), in which a plurality of coin dispensers (210) having mutually same structures each having a dispensing opening (250) for delivering stored coins (C) one by one are juxtaposed along a straight line (L) intersecting with ejecting direction lines (X), at a predetermined interval therebetween so that the ejecting direction lines of the first coin dispenser row (212) and the second coin dispenser row (214) are directed toward the opposing coin dispenser row (212, 214) and to dispose, between the first coin dispenser row (212) and the second coin dispenser row (214), a carrying belt (302) which is configured to move a coin toward a coin receiving opening (116), thereby to drop the coin (C) delivered from the coin dispenser (210) constituting the first coin dispenser row (212) or the second coin dispenser row (214) onto the carrying belt (302) and then to carry the coin toward the coin receiving opening (116) by the carrying belt (302); wherein
pairs of the coin dispensers (210) constituting the first coin dispenser row (212) and the second coin dispenser row (214) are disposed in mutually same positional relations in the direction forming a right angle with respect to the carrying belt (302) to constitute respective coin dispenser pairs (292-1 to 292-4); wherein
the plurality of coin dispenser pairs (292-1 to 292-4) are disposed along the carrying belt (302);
**characterized in that**
the coin payment apparatus has the carrying belt (302) forming a three-dimensional-box-shape dispensing space (274) above the carrying belt (302) by a first guiding wall (306) vertically standing below the dispensing openings (250) of the first coin dispenser row (212) and a second guiding wall (308) disposed to be parallel to the first guiding wall (306) and vertically standing below the dispensing openings (250) of the second coin dispenser row (214),
a lower part of at least one of the first guiding wall (306) and the second guiding wall (308) distant from the coin receiving opening (116) is formed so that the lower the lower part, the more the lower part is tilted so as to sequentially get close to the opposing first guiding wall (3.06) or second guiding wall (308), respectively, and the closer the lower part is to the coin receiving opening, the lower part gets away from the opposing first guiding wall or the second guiding wall, respectively;
in an adjacent area of the first and second coin dispenser rows (212, 214), adjacent elastic partition walls (287-1) are disposed, each elastic partition wall (287-1) has a first elastic member (334-1) forming a right angle with respect to an extending direction line (L) of the carrying belt (302); wherein,
between the adjacent elastic partition wall (287-1) in an upstream side of a moving direction of the carrying belt (302) and the adjacent elastic partition wall (287-1) in a downstream side thereof, an inclined elastic partition wall (287-2) inclined with respect to the extending direction line (L) of the carrying belt (302) is disposed, the inclined elastic partition wall (287-2) has a second elastic member (334-2); wherein,
in a front side of the dispensing opening (250) of each coin dispenser (210) of the coin dispenser pairs (292-1 to 292-4), a tapered convergence space (400) is formed by the elastic partition wall (287-1), the inclined elastic partition wall (287-2), the first elastic member (334-1) and the second elastic member (334-2).

2. Coin payment apparatus according to claim 1, wherein
upper ends of the adjacent elastic partition walls (287-1) and the inclined elastic partition wall (287-2) are fixed to a common attachment body (290); and
the attachment body (290) is attachable to and detachable from a main body of the apparatus.

3. Coin payment apparatus according to claim 1, wherein
the adjacent elastic partition walls (297-1) and the inclined elastic partition wall (287-2) are individually detachably attached to lower end parts of fixed supporting members (332) all of which having same shapes and same dimensions individually downwardly fixed to an attachment body (290).

4. Coin payment apparatus according to claim 1, wherein
the adjacent elastic partition walls (287-1) and the inclined elastic partition wall (287-2) are detachably attached to lower end parts of fixed supporting members (332) individually downwardly fixed to an attachment body (290); and
intervals from lower ends of the adjacent elastic partition walls (287-1) and the inclined elastic partition wall (287-2) to the carrying belt (302) are slightly larger than a maximum diameter of the coins serving as targets.

5. Coin payment apparatus according to claim 2, wherein
the attachment body (290) is attachable to and detachable from a main body of the apparatus by moving in a vertical direction.

## Patentansprüche

1. Münzzahlgerät, das dazu konfiguriert ist, eine erste Münzspenderreihe (212) und eine zweite Münzspenderreihe (214) nebeneinander anzuordnen, in denen viele Münzspender (210) mit einander gleichen Strukturen, die jeweils eine Spenderöffnung (250) haben, zum aufeinanderfolgenden Abgeben von gespeicherten Münzen (C) entlang einer Geraden (L), die Ausstoßrichtungslinien (X) schneidet, nebeneinander in einem dazwischenliegenden vorbestimmten Intervall so angeordnet sind, dass die Ausstoßrichtungslinien der ersten Münzspenderreihe (212) und der zweiten Münzspenderreihe (214) zu der gegenüberliegenden Münzspenderreihe (212, 214) gerichtet sind, und um zwischen der ersten Münzspenderreihe (212) und der zweiten Münzspenderreihe (214) einen Förderriemen (302) anzuordnen, der dazu konfiguriert ist, eine Münze zu einer Münzaufnahmeöffnung (116) so zu bewegen, dass die Münze (C), die von dem Münzspender (210) gefördert wird, der die erste Münzspenderreihe (212) oder die zweite Münzspenderreihe (214) bildet, auf den Förderriemen (302) herunterfällt, und um dann die Münze zu der Münzaufnahmeöffnung (116) durch den Förderriemen (302) zu befördern; wobei
Paare der Münzspender (210), die die erste Münzspenderreihe (212) und die zweite Münzspenderreihe (214) bilden, in einander gleichen Positionsbeziehungen in der Richtung angeordnet sind, die hinsichtlich des Förderriemens (302) einen rechten Winkel bildet, um jeweilige Münzspenderpaare (292-1 bis 292-4) zu bilden; wobei
die vielen Münzspenderpaare (292-1 bis 292-4) entlang des Förderriemens (302) angeordnet sind;
**dadurch gekennzeichnet, dass**
das Münzzahlgerät den Förderriemen (302) hat, der einen dreidimensionalen, kastenförmigen Spenderraum (274) über dem Förderriemen (302) durch eine erste Führungswand (306), die vertikal unter den Spenderöffnungen (250) der ersten Münzspenderreihe (212) steht, und eine zweite Führungswand (308) bildet, die parallel zu der ersten Führungswand (306) angeordnet ist und vertikal unter den Spenderöffnungen (250) der zweiten Münzspenderreihe (214) steht,
wobei ein unterer Teil zumindest entweder der ersten Führungswand (306) oder der zweiten Führungswand (308), die von der Münzaufnahmeöffnung (116) beabstandet ist, so ausgebildet ist, dass der untere Teil umso stärker geneigt ist, je niedriger der untere Teil ist, um sich sequentiell der gegenüberliegenden ersten Führungswand (306) bzw. zweiten Führungswand (308) anzunähern, und der untere Teil entfernt sich weiter von der gegenüberliegenden ersten Führungswand bzw. zweiten Führungswand, je näher der untere Teil an der Münzaufnahmeöffnung ist;
wobei in einem angrenzenden Bereich der ersten und der zweiten Münzspenderreihe (212, 214) angrenzende elastische Trennwände (287-1) angeordnet sind, wobei jede elastische Trennwand (287-1) ein erstes elastisches Element (334-1) hat, das einen rechten Winkel hinsichtlich einer Erstreckungslinie (L) des Förderriemens (302) bildet; wobei
zwischen der angrenzenden elastischen Trennwand (287-1) an einer stromaufwärtigen Seite der Bewegungsrichtung des Förderriemens (302) und der angrenzenden elastischen Trennwand (287-1) an deren stromabwärtigen Seite eine geneigte elastische Trennwand (287-1) angeordnet ist, die hinsichtlich der Erstreckungslinie (L) des Förderriemens (302) geneigt ist, wobei die geneigte elastische Trennwand (287-2) ein zweites elastisches Element (334-2) hat; wobei
an einer vorderen Seite der Spenderöffnung (250) des jeweiligen Münzspenders (210) der Münzspenderpaare (292-1 bis 292-4) ein abgeschrägter Konvergenzraum (400) durch die elastische Trennwand (287-1), die geneigte elastische Trennwand (287-2), das erste elastische Element (334-1) und das zweite elastische Element (334-2) ausgebildet ist.

2. Münzzahlgerät gemäß Anspruch 1, wobei
obere Enden der angrenzenden elastischen Trennwände (287-1) und der geneigten elastischen Trennwand (287-2) an einem gemeinsamen Anbringungskörper (290) befestigt sind; und
der Anbringungskörper (290) an einem Hauptkörper des Geräts anbringbar und von diesem lösbar ist.

3. Münzzahlgerät gemäß Anspruch 1, wobei
die angrenzenden elastischen Trennwände (297-1) und die geneigte elastische Trennwand (287-2) individuell an unteren Endteilen von festen Stützelementen (332) lösbar angebracht sind, die jeweils dieselben Formen und dieselben Maße haben und individuell unten an einem Anbringungskörper (290) befestigt sind.

4. Münzzahlgerät gemäß Anspruch 1, wobei
die angrenzenden elastischen Trennwände (287-1) und die geneigte elastische Trennwand (287-2) lösbar an unteren Endteilen von festen Stützelementen (332) angebracht sind, die individuell unten an einem Anbringungskörper (290) befestigt sind; und
Intervalle von unteren Enden der angrenzenden elastischen Trennwände (287-1) und der geneigten elastischen Trennwand (287-2) zu dem Förderriemen (302) etwas größer sind als ein maximaler Durchmesser der Münzen, die als Ziele dienen.

5. Münzzahlgerät gemäß Anspruch 2, wobei
der Anbringungskörper (290) an einen Hauptkörper des Geräts anbringbar und von diesem lösbar ist, indem er in eine vertikale Richtung bewegt wird.

## Revendications

1. Appareil de paiement à pièces configuré de manière à juxtaposer une première rangée de distributeurs de pièces (212) et une seconde rangée de distributeurs de pièces (214), dans lequel une pluralité de distributeurs de pièces (210), présentant des structures mutuellement identiques comportant chacune une ouverture de distribution (250) afin de délivrer une à une des pièces (C) stockées, sont juxtaposés suivant une ligne droite (L) coupant des lignes de direction d'éjection (X), à un intervalle prédéterminé entre eux de telle sorte que les lignes de direction d'éjection de la première rangée de distributeurs de pièces (212) et de la seconde rangée de distributeurs de pièces (214) sont dirigées vers la rangée de distributeurs de pièces opposée (212, 214) et à disposer, entre la première rangée de distributeurs de pièces (212) et la seconde rangée de distributeurs de pièces (214), une bande de transport (302) qui est configurée de manière à déplacer une pièce vers une ouverture de réception de pièces (116), de manière à placer la pièce (C) délivrée à partir du distributeur de pièces (210) constituant la première rangée de distributeurs de pièces (212) ou la seconde rangée de distributeurs de pièces (214) sur la bande de transport (302) et ensuite à transporter la pièce vers l'ouverture de réception de pièces (116) par la bande de transport (302) ; dans lequel
des paires des distributeurs de pièces (210) constituant la première rangée de distributeurs de pièces (212) et la seconde rangée de distributeurs de pièces (214) sont disposées en relation de position mutuellement identiques dans la direction formant un angle droit par rapport à la bande de transport (302) afin de constituer des paires de distributeurs de pièce respectives (292-1 à 292-4) ; dans lequel
les distributeurs de la pluralité de paires de distributeurs de pièces (292-1 à 292-4) sont disposés le long de la bande de transport (302) ;
**caractérisé en ce que**
l'appareil de paiement à pièces fait former par la bande de transport (302) un espace de distribution en forme de boîte tridimensionnelle (274) au-dessus de la bande de transport (302) par une première paroi de guidage (306) s'étendant verticalement au-dessous des ouvertures de distribution (250) de la première rangée de distributeurs de pièces (212) et une seconde paroi de guidage (308) disposée de manière à être parallèle à la première paroi de guidage (306) et s'étendant verticalement au-dessous des ouvertures de distribution (250) de la seconde rangée de distributeurs de pièces (214),
une partie inférieure d'au moins l'une de la première paroi de guidage (306) et de la seconde paroi de guidage (308) distante de l'ouverture de réception de pièces (116) est formée de telle sorte que plus la partie inférieure est basse, plus la partie inférieure est basculée de manière à se rapprocher séquentiellement respectivement de la première paroi de guidage (306) ou de la seconde paroi de guidage (308) opposées et plus la partie inférieure est proche de l'ouverture de réception de pièce, la partie inférieure s'écarte respectivement de la première paroi de guidage ou de la seconde paroi de guidage opposées ;
dans une zone adjacente des première et seconde rangées de distributeurs de pièces (212, 214), des parois de séparation élastiques adjacentes (287-1) sont disposées, chaque paroi de séparation élastique (287-1) comporte un premier élément élastique (334-1) formant un angle droit par rapport à une ligne de direction d'extension (L) de la bande de transport (302) ; dans lequel,
entre la paroi de séparation élastique adjacente (287-1) sur un côté amont d'une direction de déplacement de la bande de transport (302) et la paroi de séparation élastique adjacente (287-1) sur un côté aval de celle-ci, une paroi de séparation élastique inclinée (287-2) inclinée par rapport à la ligne de direction d'extension (L) de la bande de transport (302) est disposée, la paroi de séparation élastique inclinée (287-2) comporte un second élément élastique (334-2) ; dans lequel,
sur un côté avant de l'ouverture de distribution (250) de chaque distributeur de pièces (210) des paires de distributeurs de pièces (292-1 à 292-4), un espace de convergence incliné (400) est formé par la paroi de séparation élastique (287-1), la paroi de séparation élastique inclinée (287-2), le premier élément élastique (334-1) et le second élément élastique (334-2).

2. Appareil de paiement à pièces selon la revendication 1, dans lequel
des extrémités supérieures des parois de séparation élastiques adjacentes (287-1) et de la paroi de séparation élastique inclinée (287-2) sont fixées sur un bloc de fixation commun (290) ; et
le bloc de fixation (290) peut être fixé sur un bloc principal du dispositif et séparé de celui-ci.

3. Appareil de paiement à pièces selon la revendication 1, dans lequel
les parois de séparation élastiques adjacentes (287-1) et la paroi de séparation élastique inclinée (287-2) sont reliées individuellement de manière amovible à des parties d'extrémité inférieures d'éléments de support fixes (332), chacune présentant les mêmes formes et les mêmes dimensions fixées individuellement vers le bas sur un bloc de fixation (290).

4. Appareil de paiement à pièces selon la revendication 1, dans lequel
les parois de séparation élastiques adjacentes (287-1) et la paroi de séparation élastique inclinée (287-2) sont reliées de manière amovible à des parties d'extrémité inférieures d'éléments de support fixes (332) fixés individuellement vers le bas sur un bloc de fixation (290) ; et
des intervalles à partir d'extrémités inférieures des parois de séparation élastiques adjacentes (287-1) et de la paroi de séparation élastique inclinée (287-2) jusqu'à la bande de transport (302) sont légèrement supérieurs à un diamètre maximum des pièces servant de cible.

5. Appareil de paiement à pièces selon la revendication 2, dans lequel
le bloc de fixation (290) peut être fixé sur un bloc principal du dispositif et séparé de celui-ci par déplacement dans une direction verticale.
